(19)

Europäisches
Patentamt
European
Patent Office
Office européen
des brevets

(11) **EP 3 893 579 A1**

(12) **EUROPEAN PATENT APPLICATION**
published in accordance with Art. 153(4) EPC

(43) Date of publication:
**13.10.2021 Bulletin 2021/41**

(21) Application number: **18944843.4**

(22) Date of filing: **25.12.2018**

(51) Int Cl.:
***H04W 72/08*** *(2009.01)*

(86) International application number:
**PCT/CN2018/123615**

(87) International publication number:
**WO 2020/132892 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• **LIU, Jianghua
Shenzhen, Guangdong 518129 (CN)**
• **SU, Liyan
Shenzhen, Guangdong 518129 (CN)**

(74) Representative: **Gill Jennings & Every LLP
The Broadgate Tower
20 Primrose Street
London EC2A 2ES (GB)**

(54) **METHOD AND DEVICE FOR ACQUIRING DOWNLINK CHANNEL INFORMATION**

(57) This application provides a method for obtaining downlink channel information and an apparatus. In embodiments of this application, an access network device estimates first uplink channel state information of a terminal device based on a first reference signal received from the first terminal device, and estimates second uplink channel state information of the terminal device based on a group of second reference signals received from the terminal device. Because the group of second reference signals is precoded by using downlink channel information of the first terminal device, the access network device may determine, based on the estimated first uplink channel state information and the estimated second uplink channel state information, the downlink channel information fed back by the terminal device. Different from a general case in which feedback needs to be performed by quantizing a value by using a specific quantity of bits, the embodiments of this application can implement a feedback of a scalar/vector between the access network device and the terminal device without a quantization error, thereby improving reliability of feeding back the downlink channel information.

FIG. 1

**Description**

**TECHNICAL FIELD**

This application relates to the communications field, and more specifically, to a method for obtaining downlink channel information and an apparatus in the communications field.

**BACKGROUND**

In a wireless communications system, for example, a long term evolution (long term evolution, LTE) system or a new radio (new radio, NR) system, service transmission is scheduled based on a network device (for example, an access network device). An upper-layer data packet is divided into small data packets by transport block when the upper-layer data packet is scheduled at a physical layer, and a basic time unit of the scheduling is generally one subframe (for example, duration in LTE is 1 ms) or one slot (for example, a time corresponding to a slot in NR is configurable). Generally, a specific scheduling procedure is as follows: The access network device sends a control channel (for example, a physical downlink control channel PDCCH), where the control channel may carry scheduling information of a transport block on a downlink data channel (for example, a physical downlink shared channel PDSCH) or an uplink data channel (for example, a physical uplink shared channel PUSCH). The scheduling information includes at least one type of control information such as resource allocation information of a scheduled transport block, a modulation and coding scheme, and a hybrid automatic repeat request (hybrid automatic repeat request, HARQ). The terminal device detects the control channel in a subframe or a slot, and receives the transport block that is on the downlink data channel or sends the transport block that is on the uplink data channel based on the control information carried on the detected control channel.

In a downlink data transmission process, data may be transmitted based on closed-loop precoding. The closed-loop precoding means that there are both a downlink data transmission link and a feedback link of a terminal device in a system. After obtaining a feedback (which is usually a downlink channel) of the terminal device, the access network device may send downlink data to the terminal device in a targeted manner (that is, directional sending), to enhance received signal energy of the terminal device.

In a scenario in which uplink data and downlink data are transmitted on different carriers, a transmit end cannot obtain channel state information unless a receive end feeds back the channel state information. In a downlink data transmission process, after determining downlink channel information, the terminal device selects, by using a codebook agreed upon with the access network device in advance, a codeword closest to the downlink channel information, and feeds back an indicator (indicator) of the codeword to the access network device. The pre-agreed codebook is a precoding matrix set, and the codeword is a precoding matrix in the codebook. Then, the access network device may determine content of the downlink channel information based on the indicator of the codeword. In this process, when the terminal device selects a codeword, there is a difference between the closest codeword and the downlink channel information, and the difference may be referred to as a quantization error.

How to avoid the quantization error in a process in which the terminal device feeds back the downlink channel information is a problem that urgently needs to be resolved.

**SUMMARY**

This application provides a method for obtaining downlink channel information and an apparatus, to eliminate a quantization error existing in a process in which a terminal device feeds back downlink channel information, and improve reliability of feeding back the downlink channel information.

According to a first aspect, a method for obtaining downlink channel information is provided, where the method is performed by an access network device, and the method includes:
receiving a first reference signal from a first terminal device, to obtain first uplink channel state information; receiving a group of second reference signals from the first terminal device, to obtain second uplink channel state information, where the group of second reference signals is precoded by using downlink channel information, and the group of second reference signals includes one or more second reference signals; and obtaining the downlink channel information based on the first uplink channel state information and the second uplink channel state information.

Therefore, in this embodiment of this application, the access network device estimates the first uplink channel state information of the terminal device based on the first reference signal received from the first terminal device, and estimates the second uplink channel state information of the terminal device based on the group of second reference signals received from the terminal device. Because the group of second reference signals is precoded by using the downlink channel information of the first terminal device, the access network device may determine, based on the estimated first uplink channel state information and the estimated second uplink channel state information, the downlink channel information fed back by the first terminal device. Therefore, different from a general case in which feedback needs to be performed by quantizing a value by using a specific quantity of bits, this embodiment of this application implements a feedback of a scalar/vector between the access network device and the terminal device without a quantization error, thereby improving reliability of feeding back the downlink channel information.

With reference to the first aspect, in some implementations of the first aspect, the first reference signal may be a non-precoded sounding reference signal SRS, and the second reference signal is a precoded SRS. To be specific, the access network device receives a non-precoded sounding reference signal SRS from the first terminal device, and receives N precoded SRSs from the first terminal device, where N is a positive integer.

With reference to the first aspect, in some implementations of the first aspect, different second reference signals correspond to different first combinations, where the first combination includes a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

Specifically, when the first reference signal is a non-precoded SRS and the second reference signal is a precoded SRS, the first combinations may be N SRS resources used to send the N precoded SRSs. Specifically, each of the N SRS resources includes an SRS sequence and a time-frequency resource used to send the SRS sequence.

In a possible implementation, the N precoded SRSs are in a one-to-one correspondence with the N SRS resources. Specifically, that the N precoded SRSs are in a one-to-one correspondence with the N SRS resources means that a time-frequency resource of an $i^{th}$ precoded SRS in the N precoded SRSs is a time-frequency resource of an $i^{th}$ SRS resource in the N SRS resources, and an SRS sequence of the $i^{th}$ precoded SRS satisfies:

An SRS sequence of an $i^{th}$ precoded SRS sent by the first terminal device by using a $j^{th}$ group of antennas is equal to a product of an SRS sequence of the $i^{th}$ SRS resource in the N SRS resources and one element in the downlink channel information, where $N \geq 2$, $1 \leq i \leq N$, $1 \leq j \leq M$, M is a quantity of transmit antenna ports of the terminal device, and M, N, i, and j are all integers. It should be noted that a group of antennas may be one antenna or a plurality of antennas. In an implementation, the quantity of transmit antenna ports of the terminal device is equal to a quantity of transmit antenna groups.

Herein, the element that is in the downlink channel information and that is multiplied by the SRS sequence may also be referred to as a weighting coefficient. Correspondingly, the N precoded SRSs correspond to N weighting coefficients/N groups of weighting coefficients. Each weighting coefficient/group of weighting coefficients is also referred to as precoding. When the first terminal device has a plurality of transmit antennas, SRS sequences transmitted on the antennas may be the same or different. In this way, that different antennas send a same sequence by using a same weighting coefficient or different weighting coefficients may be considered as that the sequence is sent by using a plurality of antennas after being encoded (that is, precoded) once. The precoding defines one antenna port, that is, precoding is in a one-to-one correspondence with the antenna port. Each time a signal is sent through such precoding, it is considered as that the signal is sent on a corresponding antenna port.

With reference to the first aspect, in some implementations of the first aspect, the access network device further sends configuration information to the first terminal device, where the configuration information is used to indicate the N SRS resources. Therefore, in this embodiment of this application, the first terminal device can determine the N SRS resources based on the configuration information.

With reference to the first aspect, in some implementations of the first aspect, the N SRS resources are different from each other. Therefore, in this embodiment of this application, the access network device can distinguish between the N precoded SRSs, thereby improving detection performance of the precoded SRSs.

With reference to the first aspect, in some implementations of the first aspect, the frequency domain resource, the time domain resource, and the basic sequence in the first combination are reused by a second terminal device. In other words, L SRS resources in the N SRS resources are further used by the second terminal device to send precoded SRSs, where $2 \leq L \leq N$ and L is an integer. Herein, the second terminal device performs precoding by using L weighting coefficients/L groups of weighting coefficients.

In this embodiment of this application, one SRS resource may be used by at least two terminal devices to send precoded SRSs. Specifically, after a precoded SRS sent by the first terminal device and a precoded SRS sent by the second terminal device are superposed on the access network device side, the access network device can distinguish between the at least two precoded SRSs. Therefore, in this embodiment of this application, the first terminal device and the second terminal device may share an SRS resource, to implement SRS resource reusing between a plurality of users, and save SRS resources of precoded SRSs.

When values of L and N are the same, the first terminal device and the second terminal device send precoded SRSs by using a same SRS resource, so that SRS resources of precoded SRSs can be further saved.

With reference to the first aspect, in some implementations of the first aspect, the N weighting coefficients/N groups of weighting coefficients of the first terminal device are used to indicate normalized downlink channel information estimated by the first terminal device.

With reference to the first aspect, in some implementations of the first aspect, downlink channel information corresponding to at least one second reference signal in the group of second reference signals includes M elements in the downlink channel information. "Corresponding" downlink channel information herein indicates a predefined correspondence between the access network device, the first terminal device, and the second terminal device. For example, all elements in the downlink channel information are sorted in an order of first row and then column, then every M elements constitute one group, and each group of elements corresponds to one second reference signal.

With reference to the first aspect, in some implementations of the first aspect, downlink channel information corresponding to each second reference signal in the group of second reference signals includes M elements in the downlink channel information.

With reference to the first aspect, in some implementations of the first aspect, the downlink channel information

$$H_{DL}=\begin{bmatrix} h_{11}^D & h_{12}^D & L & h_{1Q}^D \\ h_{21}^D & h_{22}^D & L & \\ M & M & O & M \\ h_{P1}^D & & L & h_{PQ}^D \end{bmatrix}_{P\times Q}$$

includes all elements in a normalized downlink channel information matrix $H_{DL}=$ estimated by the first terminal device, where Q is a quantity of transmit antenna ports of the access network device, P is a quantity of receive antenna ports of the first terminal device, and an element $h_{s,t}^D$ in an $s^{th}$ row and a $t^{th}$ column of $H_{DL}$ represents information about a channel from a $t^{th}$ transmit antenna port of the access network device to an $s^{th}$ receive port of the first terminal device, where $1{\leq}s{\leq}P$, $1{\leq}t{\leq}Q$, and P, Q, s, and t are all integers.

With reference to the first aspect, in some implementations of the first aspect, the downlink channel information includes and includes only all the elements in the normalized downlink channel information matrix $H_{DL}$ estimated by the first terminal device.

Optionally, the N weighting coefficients/N groups of weighting coefficients are non-zero elements in an angle-time-domain sparse channel obtained after space-frequency to angle-time-domain conversion is performed.

Similarly, the L weighting coefficients/L groups of weighting coefficients of the second terminal device may be used to indicate downlink channel information estimated by the second terminal device.

In this embodiment of this application, the access network device may obtain the downlink channel matrix based on a location, in the estimated downlink channel matrix, of an element that is in the downlink channel information or based on another attribute of an element in the downlink channel information.

With reference to the first aspect, in some implementations of the first aspect, a basic sequence corresponding to the first reference signal is the same as a basic sequence corresponding to at least one of the one or more second reference signals. Specifically, SRS sequences in the N SRS resources corresponding to the N precoded SRSs include an SRS sequence corresponding to a non-precoded SRS. Therefore, this embodiment of this application can further save resources, for example, SRS resources.

With reference to the first aspect, in some implementations of the first aspect, when the group of second reference signals includes a plurality of second reference signals, the plurality of second reference signals occupy consecutive time domain symbols. Specifically, the N time domain resources for sending the SRS sequences include consecutive time domain resources, and the time domain resources may include time domain symbols. That two time domain symbols are consecutive means that the two time domain symbols may be adjacent to each other, or there is only a symbol that cannot be used to send an SRS between the two time domain symbols. Therefore, in this embodiment of this application, the terminal device can quickly send the precoded SRSs to the access network device, thereby improving efficiency of sending the precoded SRSs.

According to a second aspect, a method for obtaining downlink channel information by using a reference signal is provided, where the method is performed by a first terminal device, and the method includes:

sending, by a first terminal device, a first reference signal;
precoding, by the first terminal device, a group of reference signals based on downlink channel information, to obtain a group of second reference signals, where the group of second reference signals includes one or more second reference signals; and
sending, by the first terminal device, the group of second reference signals.

Therefore, in this embodiment of this application, an access network device estimates first uplink channel state information of the terminal device based on the first reference signal received from the first terminal device, and estimates second uplink channel state information of the terminal device based on the group of second reference signals received from the terminal device. Because the group of second reference signals is precoded by using the downlink channel information of the first terminal device, the access network device may determine, based on the estimated first uplink channel state information and the estimated second uplink channel state information, the downlink channel information fed back by the first terminal device. Therefore, different from a general case in which feedback needs to be performed by quantizing a value by using a specific quantity of bits, this embodiment of this application implements a feedback of a scalar/vector between the access network device and the terminal device without a quantization error, thereby improving reliability of feeding back the downlink channel information.

With reference to the second aspect, in some implementations of the second aspect, different second reference signals correspond to different first combinations, where the first combination includes a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

With reference to the second aspect, in some implementations of the second aspect, downlink channel information corresponding to at least one second reference signal in the group of second reference signals includes M elements in the downlink channel information, where M is a quantity of transmit antenna ports of the first terminal device.

With reference to the second aspect, in some implementations of the second aspect, the downlink channel information includes an element in an estimated downlink channel matrix.

With reference to the second aspect, in some implementations of the second aspect, the frequency domain resource, the time domain resource, and the basic sequence in the first combination are reused by a second terminal device.

With reference to the second aspect, in some implementations of the second aspect, a basic sequence corresponding to the first reference signal is the same as a basic sequence corresponding to at least one of the one or more second reference signals.

With reference to the second aspect, in some implementations of the second aspect, the group of second reference signals includes a plurality of second reference signals, and the plurality of second reference signals occupy consecutive time domain symbols.

With reference to the second aspect, in some implementations of the second aspect, the first reference signal is a non-precoded sounding reference signal SRS, and the second reference signal is a precoded SRS.

According to a third aspect, an apparatus is provided. The apparatus may be an access network device, or may be a chip in an access network device. The apparatus has functions of implementing the first aspect and various possible implementations thereof. The functions may be implemented by hardware, or may be implemented by hardware executing corresponding software. The hardware or the software includes one or more modules corresponding to the functions.

In a possible design, the apparatus includes a transceiver module. Optionally, the apparatus further includes a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module, and the processing module may execute the instructions stored in the storage module or instructions from another module, so that the apparatus performs the communication method according to the first aspect and various possible implementations thereof.

In another possible design, when the apparatus is a chip, the chip includes a transceiver module. Optionally, the apparatus further includes a processing module. The transceiver module may be, for example, an input/output interface, a pin, or a circuit on the chip. The processing module may be, for example, a processor. The processing module may execute instructions, so that the chip in the terminal performs the method according to any one of the first aspect and the possible implementations thereof. Optionally, the processing module may execute instructions in a storage module, and the storage module may be a storage module in the chip, for example, a register or a buffer. The storage module may alternatively be located inside a communications device but outside the chip, for example, a read-only memory (read-only memory, ROM), another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the communication method according to the foregoing aspects.

According to a fourth aspect, an apparatus is provided. The apparatus may be a terminal device, or may be a chip in a terminal device. The apparatus has functions of implementing the second aspect and various possible implementations thereof. The functions may be implemented by hardware, or may be implemented by hardware executing corresponding software. The hardware or the software includes one or more modules corresponding to the functions.

In a possible design, the apparatus includes a transceiver module. Optionally, the apparatus further includes a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module, and the processing module may execute the instruction stored in the storage module or another instruction, so that the apparatus performs the method according to any one of the foregoing aspects.

In another possible design, when the apparatus is a chip, the chip includes a transceiver module. Optionally, the chip further includes a processing module. The transceiver module may be, for example, an input/output interface, a pin, or a circuit on the chip. The processing module may be, for example, a processor. The processing module may execute instructions, so that the chip in the terminal performs the communication method according to any one of the second aspect and the possible implementations thereof. Optionally, the processing module may execute instructions in a storage module, and the storage module may be a storage module in the chip, for example, a register or a buffer. The storage module may alternatively be located inside a communications device but outside the chip, for example, a read-only memory (read-only memory, ROM), another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the communication method according to the foregoing aspects.

According to a fifth aspect, a computer storage medium is provided. The computer storage medium stores program code. The program code includes instructions used to indicate to perform the method according to any one of the first aspect, the second aspect, or the possible implementations thereof.

According to a sixth aspect, a computer program product including instructions is provided. When the computer program product runs on a computer, the computer is enabled to perform the method according to any one of the first aspect, the second aspect, or the possible implementations thereof.

According to a seventh aspect, a communications system is provided. The communications system includes an apparatus that has functions of implementing the method and the possible designs in the first aspect and an apparatus that has functions of implementing the method and the possible designs in the second aspect.

According to an eighth aspect, a processor is provided. The processor is coupled to a memory, and is configured to perform the method according to any one of the first aspect, the second aspect, or the possible implementations thereof.

According to a ninth aspect, a chip is provided. The chip includes a processor and a communications interface. The communications interface is configured to communicate with an external component or an internal component, and the processor is configured to implement the method according to any one of the first aspect, the second aspect, or the possible implementations thereof.

Optionally, the chip may further include a memory. The memory stores instructions. The processor is configured to execute the instructions stored in the memory or instructions from another module. When the instructions are executed, the processor is configured to implement the method according to any one of the first aspect, the second aspect, or the possible implementations thereof.

Optionally, the chip may be integrated into a terminal device or an access network device.

**BRIEF DESCRIPTION OF DRAWINGS**

FIG. 1 is a schematic flowchart of a method for obtaining downlink channel information according to an embodiment of this application;

FIG. 2 is a schematic diagram of a closed-loop precoding based system according to an embodiment of this application;

FIG. 3 is a schematic diagram of a closed-loop precoding based system according to an embodiment of this application;

FIG. 4 is a schematic diagram of sending a precoded SRS based on a sub-band SRS according to an embodiment of this application;

FIG. 5 is a schematic flowchart of a method for obtaining downlink channel information according to an embodiment of this application;

FIG. 6 is a schematic diagram showing that an SRS sequence 1 and an SRS sequence 2 are orthogonal;

FIG. 7 is a schematic block diagram of a communications apparatus according to an embodiment of this application;

FIG. 8 is a schematic block diagram of another communications apparatus according to an embodiment of this application;

FIG. 9 is a schematic block diagram of another communications apparatus according to an embodiment of this application; and

FIG. 10 is a schematic block diagram of another communications apparatus according to an embodiment of this application.

## DESCRIPTION OF EMBODIMENTS

The following describes technical solutions in this application with reference to the accompanying drawings.

The technical solution in the embodiments of this application may be applied to a long term evolution (long term evolution, LTE) system, an LTE frequency division duplex (frequency division duplex, FDD) system, a universal mobile telecommunications system (universal mobile telecommunication system, UMTS), a worldwide interoperability for microwave access (worldwide interoperability for microwave access, WiMAX) communications system, and a future 5th generation (5th generation, 5G) system, a new radio (new radio, NR) system, or the like.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

An access network device in the embodiments of this application may be a device configured to communicate with the terminal device. The access network device may be a base transceiver station (base transceiver station, BTS) in a global system for mobile communications (global system for mobile communications, GSM) system or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in the embodiments of this application.

In addition, the access network device in the embodiments of this application may include a centralized unit (central unit, CU) and a distributed unit (distributed unit, DU). Specifically, the access network device may include one CU and a plurality of DUs. An action of the access network device in the embodiments of this application may be performed by a CU, a DU, or a CU cooperating with a DU. This is not limited in the embodiments of this application. It should be understood that the access network device is used as an example for description herein. The access network device in the embodiments of this application may alternatively be a chip in an access network device, or a chip in a CU and/or a DU. This is not limited in the embodiments of this application.

For ease of understanding of the embodiments of this application, the following several concepts are introduced before this application is described.

1. Time-frequency resource

The "time-frequency resource" may be understood as "a time domain resource and/or a frequency domain resource".

The time domain resource may be one or more symbols, or one or more slots. The "symbol" is a time domain symbol, and may be an orthogonal frequency division multiplexing (orthogonal frequency division multiplexing, OFDM) symbol or a discrete Fourier transform spread orthogonal frequency division multiplexing (discrete fourier transform spread OFDM, DFTS-OFDM) symbol.

The frequency domain resource may be one or more resource blocks (resource block, RB), one or more resource elements (resource element, RE), one or more carriers, one or more bandwidth parts (bandwidth part, BWP), or another frequency domain unit.

2. Sounding reference signal (sounding reference signal, SRS)

In the embodiments of this application, a "non-precoded SRS" and a "precoded SRS" are involved.

The non-precoded SRS may also be referred to as a "regular SRS", or may be directly referred to as an "SRS", and is used by the access network device to estimate uplink channel state information of the terminal device. Specifically, the terminal device may send a non-precoded SRS to the access network device based on a configured SRS resource. Because the access network device already knows the SRS resource, the access network device may estimate the uplink channel state information of the terminal device based on the received non-precoded SRS that passes through an uplink channel.

The precoded SRS may also be referred to as a "virtual precoded (virtual precoding) SRS". Specifically, a precoding matrix may be used to precode a "regular SRS". Essentially, an original uplink channel is changed to an equivalent uplink channel through precoding on the SRS. That is, equivalent uplink channel state information includes precoding information.

The following explains the foregoing concepts again in a formulaic language: The "regular SRS" is denoted as $S$, and according to a feature of the SRS, $SS^H=I$ is usually true. The "virtual precoded SRS" is a regular SRS obtained after precoding is performed by using a precoding matrix. Herein, if the used precoding is denoted as $W$, the "virtual precoded SRS" is $WS$. After passing through a channel, the virtual precoded SRS changes to $H_{UL}WS$. After receiving $H_{UL}WS$, the access network device performs algorithmic processing (for example, post-multiplying $H_{UL}WS$ by $S^H$) at a receive end, to obtain the "equivalent uplink channel state information" $H_{UL}W$. It can be learned that the "equivalent uplink channel state information" includes the "precoding information" $W$.

Specifically, the terminal device sends the precoded SRS to the access network device based on the configured SRS resource. Because the access network device already knows the SRS resource, the access network device may estimate the equivalent uplink channel state information of the terminal device based on the received precoded SRS that passes through an uplink channel. After obtaining both the "uplink channel state information" and the "equivalent uplink channel state information", the access network device may reversely parse out the precoding included in the equivalent uplink channel state information. Based on this, if the terminal device adds, to precoding, the information that needs to be notified to the access network device, the quantization error can be avoided, and the information can be directly fed back to the access network device.

It should be noted that the SRS resource corresponding to the precoded SRS or the SRS resource corresponding to the non-precoded SRS herein may be configured by the access network device, or may be preconfigured. This is not limited in the embodiments of this application. An example in which the SRS resource is configured by the access network device is used below for description. However, this constitutes no limitation on the embodiments of this application.

3. SRS resource

The access network device may configure an SRS resource used to send a non-precoded SRS and an SRS resource used to send a precoded SRS. In the embodiments of this application, the SRS resource includes an SRS sequence and a time-frequency resource used to send the SRS sequence.

In the embodiments of this application, after determining the SRS resource corresponding to the non-precoded SRS, the terminal device sends, by using a time-frequency resource included in the SRS resource, an SRS sequence included in the SRS resource, with no need to perform precoding processing on the SRS sequence.

In the embodiments of this application, after determining the SRS resource corresponding to the precoded SRS, the terminal device precodes an SRS sequence in the SRS resource by using a precoding matrix, and sends a precoded SRS sequence by using a time-frequency resource included in the SRS resource. For example, the precoding matrix may be a weighting coefficient. In this case, that the SRS sequence in the SRS resource is precoded by using the precoding matrix may be specifically: performing a product operation on the weighting coefficient and the SRS sequence.

As an example, an SRS sequence of an SRS resource is denoted as [a1, a2, ..., an], a time domain resource used to send the SRS sequence is a $k^{th}$ symbol in a transmission time interval (transmission time interval, TTI) #n, and a frequency domain resource used to send the SRS sequence is the first RB to the fourth RB. Herein, the TTI #n represents a TTI whose index (index) is n, that is, an $n^{th}$ TTI. If a sequence [a1, a2, ..., an]b, that is, a product of the sequence and a scalar, corresponding to an SRS is sent on the time-frequency resource, it is referred to as that the SRS is sent on the SRS resource, where a1, a2, ..., an, and b are all scalars, and n and k are positive integers. For example, k ranges from 1 to 14. For example, b is a scalar whose modulus is 1. When b=1, a sequence [a1, a2, ..., an] is sent on the SRS resource.

4. Channel information

In the embodiments of this application, downlink channel information is generally any matrix or vector that may carry information about a downlink channel $H_{DL}$, including the channel H, a part of the channel H, and an eigenvector of the channel H. The downlink channel information is involved in the embodiments of this application. In addition, the uplink channel state information in the embodiments of this application may be an uplink channel $H_{UL}$ in the standard. The uplink channel state information is involved in the embodiments of this application.

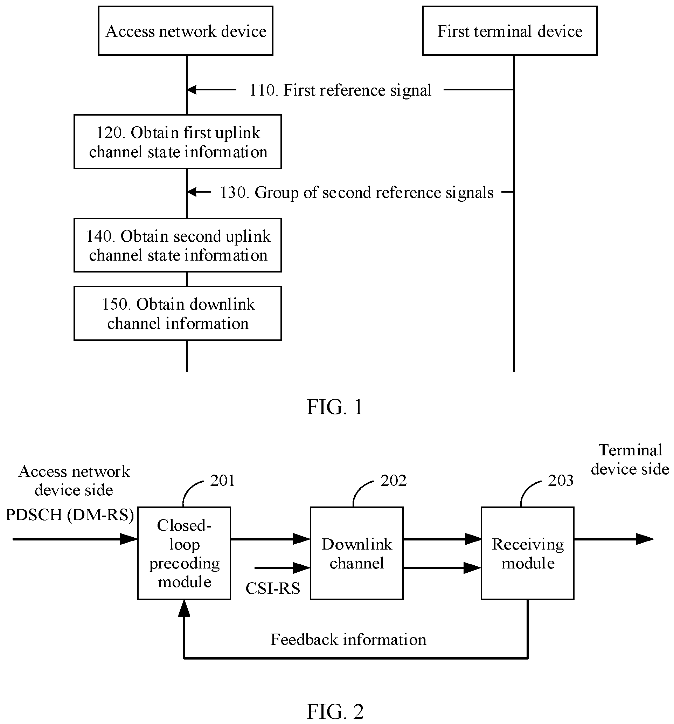

FIG. 1 is a schematic flowchart of a method for obtaining downlink channel information according to an embodiment of this application. For ease of description, in this application, an access network device, a first terminal device, and a second terminal device are used as an example to describe obtaining of downlink channel information. For implementation methods of a chip in the access network device, a chip in the first terminal device, and a chip in the second terminal device, refer to specific descriptions of the access network device, the first terminal device, and the second terminal device. Details are not described again.

110. The first terminal device sends first reference information to the access network device. Correspondingly, the access network device receives the first reference information from the first terminal device.

Herein, the first reference information may be a non-precoded SRS. For ease of description, the following uses an example in which the first reference information is a non-precoded SRS for description. It may be understood that the first reference information may alternatively be other information, for example, a physical uplink control channel (physical uplink control channel, PUCCH) or a physical uplink shared channel (physical uplink shared channel, PUSCH). Herein, information carried on the PUCCH and the PUSCH is known information predetermined by the access network device and the first terminal device. This is not specifically limited in this embodiment of this application.

Specifically, the first terminal device sends the non-precoded SRS to the access network device. Correspondingly, the access network device receives the non-precoded SRS that passes through an uplink channel, where the non-encoded SRS is used by the access network device to estimate uplink channel state information of the first terminal device, that is, first uplink channel state information.

120. The access network device obtains the first uplink channel state information based on the received first reference information. Specifically, the access network device estimates the uplink channel state information of the first terminal device based on the received first reference information.

Optionally, in this embodiment of this application, the access network device sends first information to the first terminal device, where the first information is used to indicate an SRS resource corresponding to the non-precoded SRS. In an example, a quantity of SRS resources corresponding to the non-precoded SRS of the first terminal device is a quantity of transmit antenna ports of the first terminal device.

Optionally, in this embodiment of this application, the second terminal device also sends a non-precoded SRS to the access network device. Correspondingly, the access network device receives the non-precoded SRS sent by the second terminal device, where the non-encoded SRS is used by the access network device to estimate uplink channel state information of the second terminal device.

After non-precoded SRSs sent by a plurality of terminal devices are superposed on the access network device side, the access network device cannot distinguish between the plurality of non-precoded SRSs. Therefore, in an example, to enable the access network device to distinguish between non-precoded SRSs of different terminal devices, a plurality of terminal devices may use different SRS resources to send non-precoded SRSs. In other words, the SRS resources occupied when the terminal devices send the non-precoded SRSs are different.

130. The first terminal device sends a group of second reference signals to the access network device. The group of second reference signals is precoded by using downlink channel information, and the group of second reference signals includes one or more second reference signals. Correspondingly, the access network device receives the group of second reference signals.

140. The access network device obtains second uplink channel state information based on the received group of second reference information. Specifically, the access network device estimates, based on the received second reference information, a product of the downlink channel information used by the first terminal device and the uplink channel state information, that is, the second uplink channel state information.

Herein, the second reference signal is a precoded SRS. For ease of description, the following uses an example in which the second reference information is a precoded SRS for description. It may be understood that the second reference information may alternatively be other reference information, for example, a physical uplink control channel PUCCH or a physical uplink shared channel PUSCH. Herein, information carried on the PUCCH and the PUSCH is information unknown to the access network device. This is not specifically limited in this embodiment of this application.

Specifically, the first terminal device sends N precoded SRSs to the access network device. Correspondingly, the access network device receives the N precoded SRSs that pass through an uplink channel, where the precoded SRSs are used by the access network device to estimate a product of uplink channel state information of the first terminal device and the downlink channel information, that is, the second uplink channel state information.

Optionally, in this embodiment of this application, different second reference signals correspond to different first combinations, where the first combination includes a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

Specifically, when the first reference signal is a non-precoded SRS and the second reference signal is a precoded SRS, the first combinations may be N SRS resources used to send the N precoded SRSs, and the basic sequence may be the basic sequence described above.

Specifically, the first terminal device sends the N precoded SRSs by using the N SRS resources, and the N precoded SRSs are in a one-to-one correspondence with the N SRS resources.

For example, when N=4, the first terminal device sends four precoded SRSs by using four SRS resources, and the four SRS resources are all located in a first TTI. In an example, the four SRS resources may be separately located on the eleventh, the twelfth, the thirteenth, and the fourteenth symbols. In another example, SRS sequences corresponding to all SRS resources are the same. In this case, the four precoded SRSs are in a one-to-one correspondence with the four SRS resources. For example, the first precoded SRS corresponds to the SRS resource on the eleventh symbol, the second precoded SRS corresponds to the SRS resource on the twelfth symbol, the third precoded SRS corresponds to the SRS resource on the thirteenth symbol, and the fourth precoded SRS corresponds to the SRS resource on the fourteenth symbol.

Optionally, each SRS resource occupies a full bandwidth or a bandwidth part.

In this embodiment of this application, each of the N SRS resources includes an SRS sequence and a time-frequency resource used to send the SRS sequence, a time-frequency resource corresponding to an $i^{th}$ precoded SRS in the N precoded SRSs is a time-frequency resource of an $i^{th}$ SRS resource in the N SRS resources, and an SRS sequence corresponding to the $i^{th}$ precoded SRS satisfies:

An SRS sequence of an $i^{th}$ precoded SRS sent by the first terminal device by using a $j^{th}$ group of antennas is equal to a product of an SRS sequence of the $i^{th}$ SRS resource in the N SRS resources and one element in the downlink channel information, where $N \geq 2$, $1 \leq i \leq N$, $1 \leq j \leq M$, M is a quantity of transmit antenna ports of the first terminal device, and M, N, i, and j are all integers. Herein, one group of antennas may be one antenna or a plurality of antennas, and the quantity of transmit antenna ports of the first terminal device is equal to a quantity of transmit antenna groups of the first terminal device. Herein, the element that is in the downlink channel information and that is multiplied by the SRS sequence may also be referred to as a weighting coefficient. The N precoded SRSs correspond to N weighting coefficients/N groups of weighting coefficients.

For example, the first terminal device has two antennas in total, the first precoded SRS $S_1$ sent on a first antenna is $h_1 S_1$, the first precoded SRS $S_1$ sent on a second antenna is $h_2 S_1$, the second precoded SRS $S_2$ sent on the first antenna is $h_3 S_2$, and the second precoded SRS $S_2$ sent on the second antenna is $h_4 S_2$. For another example, the first terminal device has four antennas in total, a first antenna and a second antenna form a first group of antennas, a third antenna and a fourth antenna form a second group of antennas, the first precoded SRS $S_1$ sent on the first group of antennas is $h_1 S_1$, the first precoded SRS $S_1$ sent on the second group of antennas is $h_2 S_1$, the second precoded SRS $S_2$ sent on the first group of antennas is $h_3 S_2$, and the second precoded SRS $S_2$ sent on the second group of antennas is $h_4 S_2$.

It should be noted that each group of weighting coefficients (that is, $[h_1\ h_2]$ or $[h_3\ h_4]$ in the foregoing example, where the weighting coefficients $[h_1\ h_2]$ correspond to the SRS $S_1$, and the weighting coefficients $[h_3\ h_4]$ correspond to the SRS $S_2$) is also referred to as precoding. When the first terminal device has a plurality of transmit antennas, SRS sequences transmitted on the antennas may be the same or different. In this way, that different antennas send a same sequence by using a same weighting coefficient or different weighting coefficients may be considered as that the sequence is sent by using a plurality of antennas after being encoded (that is, precoded) once. The precoding defines one antenna port, that is, precoding is in a one-to-one correspondence with the antenna port. Each time a signal is sent through such precoding, it is considered as that the signal is sent on a corresponding antenna port.

It should be noted that, in this embodiment of this application, N weighting coefficients are used as an example for description. Similar to a case of one transmit antenna port, a person skilled in the art can easily apply the solution in this embodiment of this application to a terminal device having a plurality of transmit antenna ports. This falls within the protection scope of this application.

Still using the foregoing example in which N=4, it is denoted that an SRS sequence corresponding to each SRS resource is s. For example, s is [a1, a2, ..., an]. In this case, for the first precoded SRS, a sequence $h_1 s$ is sent within a full bandwidth on the eleventh symbol of the first TTI; for the second precoded SRS, a sequence $h_2 s$ is sent within the full bandwidth on the twelfth symbol of the first TTI; for the third precoded SRS, a sequence $h_3 s$ is sent within the full bandwidth on the thirteenth symbol of the first TTI; for the fourth precoded SRS, a sequence $h_4 s$ is sent within the full bandwidth on the fourteenth symbol of the first TTI. $h_1$ is the first weighting coefficient in the four weighting coefficients, $h_2$ is the second weighting coefficient in the four weighting coefficients, $h_3$ is the third weighting coefficient in the four weighting coefficients, and $h_4$ is the fourth weighting coefficient in the four weighting coefficients.

As an example, in this embodiment of this application, the downlink channel information is precoding, or the N weighting coefficients may also be referred to as a precoding matrix. $h_i$ is the downlink channel information, where i=1, 2, 3, 4.

In an example, the access network device sends second information to the first terminal device. Correspondingly, the first terminal device receives the second information from the access network device. The second information is used to indicate the N SRS resources, and each of the N SRS resources includes an SRS sequence and a time-frequency resource used to send the SRS sequence.

In some possible examples of this application, the N SRS resources are different from each other.

It should be noted that, that the N SRS resources are different from each other means that any two of the N SRS resources are different. Herein, that two SRS resources are different may be understood as that at least one of SRS sequences, time domain resources for sending the SRS sequences, and frequency domain resources for sending the SRS sequences of the two SRS resources is different.

Optionally, the group of second reference signals includes a plurality of second reference signals, and the plurality of second reference signals occupy consecutive time domain symbols.

In some possible examples of this application, the N time domain resources for sending the SRS sequences include consecutive time domain resources. In this embodiment of this application, the time domain resources may be time domain symbols. It should be noted that, that the time domain resources are time domain symbols is used as an example, the consecutive time domain symbols may be consecutive time domain symbols in a time domain symbol set that can be used to send an SRS sequence. In other words, two consecutive time domain symbols may be adjacent to each other, or there is only a symbol that cannot be used to send an SRS sequence between two consecutive time domain symbols. An existing NR system is used as an example. Symbols that cannot be used to send an SRS sequence are, for example, the first eight symbols in each slot. This is not limited in this embodiment of this application.

Optionally, a basic sequence corresponding to the first reference signal is the same as a basic sequence corresponding to at least one of the one or more second reference signals. Specifically, in this embodiment of this application, the N SRS sequences corresponding to the N SRS resources of the first terminal device include an SRS sequence corresponding to the non-precoded SRS of the first terminal device. In this way, SRS resources can be further saved.

For example, when sending the precoded SRS, the first terminal device uses the sequence s. Therefore, when sending the non-precoded SRS, the first terminal device also uses the sequence s. If the first terminal device uses sequences $s_1$ and $s_2$ when sending the precoded SRS, the first terminal device uses the sequences $s_1$ and/or $s_2$ when sending the non-precoded SRS.

Optionally, in this embodiment of this application, the N weighting coefficients/N groups of weighting coefficients of the first terminal device are used to indicate normalized downlink channel information estimated by the first terminal device.

In a possible implementation, the N weighting coefficients/N groups of weighting coefficients are normalized downlink channel information between the access network device and the first terminal device. In a possible implementation, the N weighting coefficients/N groups of weighting coefficients include elements in a normalized downlink channel information matrix estimated by the first terminal device. As an example, the N weighting coefficients/N groups of weighting coefficients are a part of downlink channel information. For example, the access network device indicates, by using dynamic signaling or higher layer signaling, that the N weighting coefficients/N groups of weighting coefficients are an $i^{th}$ row of a downlink channel information matrix, that is, downlink channel information corresponding to an $i^{th}$ antenna port of a user.

In a possible implementation, the N weighting coefficients/N groups of weighting coefficients are all elements in eigenvectors of a downlink channel matrix between the access network device and the first terminal device.

In a possible implementation, the N weighting coefficients/N groups of weighting coefficients are eigenvectors of a downlink channel matrix between the access network device and the first terminal device. For example, the first terminal device performs eigenvalue decomposition on the downlink channel matrix to obtain each eigenvector of the downlink channel matrix. The access network device indicates, by using dynamic signaling or higher layer signaling, that the N weighting coefficients/N groups of weighting coefficients are all elements in an $i^{th}$ to a $j^{th}$ eigenvector (for example, the first and the second eigenvectors). For another example, the N weighting coefficients are eigenvectors corresponding to maximum eigenvalues of the downlink channel information matrix.

In another possible implementation of this application, the N weighting coefficients/N groups of weighting coefficients are other downlink channel information, for example, non-zero elements in an angle-time-domain sparse channel obtained after space-frequency to angle-time-domain conversion is performed. Content of the N weighting coefficients/N groups of weighting coefficients is also indicated by the access network device by using dynamic signaling or higher layer signaling.

Optionally, downlink channel information corresponding to at least one second reference signal in the group of second reference signals includes M elements in the downlink channel information, where M is a quantity of transmit antenna ports of the first terminal device.

In a possible implementation, the access network device notifies that the N groups of weighting coefficients are used to transmit a total of X values, for example, X elements in a normalized downlink channel information matrix, and X cannot be exactly divided by N. In an optional embodiment, the terminal device adds $M \times N - X$ zeros after the X values, and then divides the $M \times N$ values (X values plus $M \times N - X$ zeros) into N groups of weighting coefficients, to obtain the precoded SRSs, where each group of weighting coefficients includes M weighting coefficients. Alternatively, in another optional embodiment, the terminal device encodes the X values to obtain $M \times N$ values, where an encoding rule is a predefined rule, and then divides the $M \times N$ values into N groups of weighting coefficients, to obtain the precoded SRSs.

In some optional embodiments of this application, when the N SRS resources occupy consecutive time domain resources, the precoded SRSs occupy consecutive time domain resources; or when the N SRS resources occupy consecutive time domain symbols, the precoded SRSs occupy consecutive time domain symbols. Specifically, for consecutive time domain resources or time domain symbols, refer to the foregoing descriptions. To avoid repetition, details are not described herein again. In this way, the terminal device can quickly send the precoded SRSs to the access network device, thereby improving efficiency of sending the precoded SRSs.

In some examples of this application, L SRS resources in the N SRS resources are further used by the second terminal device to send precoded SRSs, where 2≤L≤N and L is an integer.

Specifically, a manner in which the second terminal device sends the precoded SRSs by using the L SRS resources is similar to a manner in which the first terminal device sends the precoded SRSs by using the N SRS resources. For details, refer to the foregoing descriptions. For brevity, details are not described herein again.

It should be noted that the L weighting coefficients of the second terminal device may be used to indicate downlink channel information estimated by the second terminal device. Specifically, for the L weighting coefficients of the second terminal device, refer to descriptions of the N weighting coefficients of the first terminal device. For brevity, details are not described herein again.

Correspondingly, the access network device may further receive, from the second terminal device, the L precoded SRSs sent by using the L SRS resources, and the L precoded SRSs of the second terminal device are in a one-to-one correspondence with the L SRS resources.

It can be learned that, in this embodiment of this application, one SRS resource may be used by at least two terminal devices to send precoded SRSs. Specifically, in this embodiment of this application, after a precoded SRS sent by the first terminal device and a precoded SRS sent by the second terminal device are superposed on the access network device side, the access network device can distinguish between the at least two precoded SRSs. In this way, the first terminal device and the second terminal device may share an SRS resource, to implement SRS resource reusing between a plurality of users, and save SRS resources of precoded SRSs.

As an example, when L=N, the N SRS resources are further used by the second terminal device to send the precoded SRSs. It should be noted that, in this embodiment of this application, when values of L and N are the same, the first terminal device and the second terminal device send precoded SRSs by using a same SRS resource, so that SRS resources of precoded SRSs can be further saved.

Optionally, in this embodiment of this application, N is a quantity of transmit antenna ports of the access network device. In a possible implementation of this application, when N is the quantity of transmit antenna ports of the access network device, a quantity of SRS resources allocated by the access network device to the second terminal device is also N, that is, L=N.

In an example, the access network device groups a plurality of (that is, at least two) terminal devices into one group. For example, a group of terminal devices includes the first terminal device and the second terminal device described above. Optionally, the access network device allocates N SRS resources to each terminal device in the group.

In some possible examples, the access network device allocates same N SRS resources to each terminal device. To be specific, the N SRS resources of the first terminal device are the same as the N SRS resources of the second terminal device. In this way, SRS resources of the precoded SRSs can be further saved.

It should be noted that when a plurality of terminal devices in a terminal device group have same N SRS resources, a quantity of terminal devices in the terminal device group is less than or equal to N divided by M, where M is a quantity of transmit antenna ports of each terminal device.

Optionally, the downlink channel information includes and only includes all elements in a normalized downlink channel information matrix
$$H_{DL}=\frac{1}{A}\begin{bmatrix} h_{11}^D & h_{12}^D & L & h_{1Q}^D \\ h_{21}^D & h_{22}^D & L & \\ M & M & O & M \\ h_{P1}^D & & L & h_{PQ}^D \end{bmatrix}_{P\times Q}$$
estimated by the first terminal device, where Q is a quantity of transmit antenna ports of the access network device, P is a quantity of receive antenna ports of the first terminal device, and an element $h_{s,t}^D$ in an $s^{th}$ row and a $t^{th}$ column of $H_{DL}$ represents information about a channel from a $t^{th}$ transmit antenna port of the access network device to an $s^{th}$ receive port of the first terminal device, where A is a normalized coefficient, 1≤s≤P, 1≤t≤Q, and P, Q, s, and t are all integers.

The normalized downlink channel information matrix is a new matrix obtained by dividing a downlink channel matrix by a modulus value of an element with a largest modulus value in the matrix. The normalized downlink channel information matrix has the following characteristics:

In the matrix, a modulus value of an element whose modulus value is the largest is 1, and modulus values of other elements do not exceed 1.

A ratio of any two elements (for example, $h_{11}^D$ and $h_{12}^D$ ) in the normalized downlink channel information matrix is the same as a ratio of corresponding elements ($h_{11}$ and $h_{12}$) in the downlink channel information matrix. This is because they are both divided by a same real number.

For example, when P=2 and Q=16, weighting coefficients of 16 SRS sequences sent on the first antenna port are 16 elements in the first row in the downlink channel information matrix with 2 rows and 16 columns, and weighting coefficients of 16 SRS sequences sent on the second antenna port are 16 elements in the second row in the downlink channel information matrix with 2 rows and 16 columns. In this way, the terminal device may feed back the downlink channel information matrix as the weighting coefficients to the access network device by using the two antenna ports, thereby avoiding a quantization error in a process of feeding back the downlink channel matrix.

In this embodiment of this application, the access network device may obtain the downlink channel matrix based on a location, in the estimated downlink channel matrix, of an element that is in the downlink channel information or based on another attribute of an element in the downlink channel information.

Generally, for an apparatus, for example, the access network device or the first terminal device, a quantity of transmit antenna ports is less than or equal to a quantity of receive antenna ports of the apparatus. The following embodiments are described by using an example in which a quantity of transmit antenna ports of each apparatus is equal to a quantity of receive antenna ports. It should be noted that, if a quantity of transmit antenna ports of the first terminal device is less than a quantity of receive ports of the first terminal device, the downlink channel information matrix $H_{DL}$ may be divided into a plurality of channel sub-matrices, where a quantity of columns of each channel sub-matrix is the same as that of the downlink channel information matrix $H_{DL}$, and a quantity of rows of each channel sub-matrix is the same as or less than the quantity of receive end ports. Then, information about the entire channel matrix $H_{DL}$ is fed back to the base station by transmitting the precoded SRSs for a plurality of times.

For example, both a quantity of transmit antenna ports and a quantity of receive antenna ports of a network device are 4, a quantity of transmit antenna ports of the first terminal device is 1, and a quantity of receive antenna ports of the first terminal device is 2. In this case, the downlink channel information matrix $H_{DL}$ is a 2x4 matrix, and the first terminal device divides the matrix into two 1x4 matrices that are denoted as $H_1$ and $H_2$ separately. Therefore, the first terminal device needs to send a precoded SRS twice. N (N=4) weighting coefficients for sending the SRS precoded for the first time are four elements in the first row (that is, a unique row) of the channel matrix $H_1$, and four weighting coefficients for sending the SRS precoded for the second time are four elements in the first row of the channel matrix $H_2$.

A downlink channel is normalized to eliminate impact of small-scale channel fading on performance of a precoded SRS.

150. The access network device obtains the downlink channel information based on the first uplink channel state information and the second uplink channel state information.

Specifically, when the first reference signal is the non-precoded SRS and the second reference signal is the precoded SRS, the access network device obtains the first uplink channel state information based on the received non-precoded SRS that passes through the uplink channel, and obtains the second uplink channel state information based on the precoded SRS that passes through the uplink channel, that is, the product of the downlink channel information used by the first terminal device and the uplink channel state information. Then, the access network device determines the downlink channel information based on the first uplink channel state information and the second uplink channel state information.

Specifically, the access network device may receive non-precoded SRSs that are of a plurality of terminal devices and that are obtained through uplink information, estimate uplink channel state information of each terminal device, and estimate a product of the uplink channel state information of each terminal device and a weighting coefficient of each terminal device based on the received precoded SRS that is of each terminal device and that passes through the uplink channel. Then, the access network device reversely parses out the weighting coefficient of each terminal device.

Still using the foregoing example in which N=4, the access network device obtains the non-precoded SRS (denoted as $H_{UL,1}$ **s1**) that is of the first terminal device and that passes through the uplink channel and the non-precoded SRS (denoted as $\mathbf{H}_{UL,2}$ **s2**) that is of the second terminal device and that passes through the uplink channel, and then obtains state information $H_{UL,1}$ of an uplink channel between the access network device and the first terminal device and state information $H_{UL,2}$ of an uplink channel between the access network device and the second terminal device.

In an example, if the N SRS resources corresponding to the N precoded SRSs of the second terminal device are the same as those of the first terminal device, the access network device may obtain a mixed signal (including noise) of the precoded SRSs that are of the first terminal device and the second terminal device and that pass through the uplink channels, and the mixed signal is denoted as:

$$\mathbf{Y} = \mathbf{H}_{UL,1} \sum_{i=1}^{4} h_i \mathbf{s}_i + \mathbf{H}_{UL,2} \sum_{i=1}^{4} h_{i+4} \mathbf{s}_i + \mathbf{N} = \begin{bmatrix} \mathbf{H}_{UL,1} & \mathbf{H}_{UL,2} \end{bmatrix} \begin{bmatrix} h_1 & h_2 & h_3 & h_4 \\ h_5 & h_6 & h_7 & h_8 \end{bmatrix} \begin{bmatrix} \mathbf{s}_1 \\ \mathbf{s}_2 \\ \mathbf{s}_3 \\ \mathbf{s}_4 \end{bmatrix} + \mathbf{N} ,$$

where $\mathbf{H}_{UL,1}$ and $\mathbf{H}_{UL,2}$ are uplink channel matrices of the first terminal device and the second terminal device respectively, and $h_5$, $h_6$, $h_7$, and $h_8$ are four weighting coefficients of the second terminal device. In this case, because $[\mathbf{H}_{UL,1} \ \mathbf{H}_{UL,2}]$

and $\begin{bmatrix} \mathbf{s}_1 \\ \mathbf{s}_2 \\ \mathbf{s}_3 \\ \mathbf{s}_4 \end{bmatrix}$ are both known, and are respectively full column rank and full row rank. The network device may obtain estimated values of the weighting coefficients by separately pre-multiplying and post-multiplying the mixed signal Y by a matrix, that is, by using $\mathbf{U}_1 \mathbf{Y} \mathbf{U}_2$ , to parse out the weighting coefficients $h_1$, $h_2$, $h_3$, and $h_4$ of the first terminal device and the weighting coefficients $h_5$, $h_6$, $h_7$, and $h_8$ of the second terminal device.

In a possible implementation, $\mathbf{U}_1 = \left( \begin{bmatrix} \mathbf{H}_{UL,1} & \mathbf{H}_{UL,2} \end{bmatrix}^H \begin{bmatrix} \mathbf{H}_{UL,1} & \mathbf{H}_{UL,2} \end{bmatrix} + \sigma_1^2 \mathbf{I} \right)^{-1} \begin{bmatrix} \mathbf{H}_{UL,1} & \mathbf{H}_{UL,2} \end{bmatrix}^H$ and

$\mathbf{U}_2 = \begin{bmatrix} \mathbf{s}_1 \\ \mathbf{s}_2 \\ \mathbf{s}_3 \\ \mathbf{s}_4 \end{bmatrix}^H \left( \begin{bmatrix} \mathbf{s}_1 \\ \mathbf{s}_2 \\ \mathbf{s}_3 \\ \mathbf{s}_4 \end{bmatrix} \begin{bmatrix} \mathbf{s}_1 \\ \mathbf{s}_2 \\ \mathbf{s}_3 \\ \mathbf{s}_4 \end{bmatrix}^H + \sigma_2^2 \mathbf{I} \right)^{-1}$ are referred to as minimum mean square error (minimum mean square error, MMSE)

estimation, where $\sigma_1^2$ and $\sigma_2^2$ are parameters related to noise of an uplink received signal, and the MMSE estimation can ensure a minimum mean square error of a weighting coefficient matrix in a linear estimator. It should be noted that the foregoing descriptions are merely an example, and a manner used by the access network device to solve the weighting coefficient is not limited in this embodiment of this application.

Therefore, in this embodiment of this application, the access network device estimates the first uplink channel state information of the terminal device based on the first reference signal received from the first terminal device, and estimates the second uplink channel state information of the terminal device based on the group of second reference signals received from the terminal device. Because the group of second reference signals is precoded by using the downlink channel information of the first terminal device, the access network device may determine, based on the estimated first uplink channel state information and the estimated second uplink channel state information, the downlink channel information fed back by the first terminal device. Therefore, different from a general case in which feedback needs to be performed by quantizing a value by using a specific quantity of bits, this embodiment of this application implements a feedback of a scalar/vector between the access network device and the terminal device without a quantization error, thereby improving reliability of feeding back the downlink channel information.

FIG. 2 is a schematic diagram of a closed-loop precoding based system according to an embodiment of this application. As shown in FIG. 2, the closed-loop precoding based system includes both a downlink data transmission link and a terminal device feedback link.

The downlink data transmission link starts from an access network device side and ends at a terminal device side, and is used for downlink data transmission. Specifically, the downlink data is first precoded by using a closed-loop precoding module 201, then downlink transmission is performed on precoded downlink data by using a downlink channel 202. Then, a receiving module on the terminal device side receives the downlink data that is precoded by using the downlink channel. Herein, the downlink data includes, for example, a physical downlink shared channel (physical downlink shared channel, PDSCH), and the PDCSH may include a demodulation reference signal (demodulation reference signal, DM-RS). The downlink data transmission link is a core of a downlink transmission system, and is a part necessary to the downlink transmission system.

On the contrary, the feedback link starts from the terminal device side and ends at the access network device side, and is used by the terminal device to send, to the access network device, information (that is, feedback information, mainly including some status information of the downlink data transmission link, for example, downlink channel information) that is known by the terminal device but unknown to the access network device. Specifically, the access network device sends a channel state information reference signal (channel-state information reference signal, CSI-RS) to the terminal device, so that the terminal device estimates downlink channel information. The terminal device may use the estimated downlink channel information as the feedback information. The feedback information is sent by the terminal device side to the access network device side on the feedback link. After obtaining the feedback of the status information of the downlink data transmission link of the terminal device, the access network device may send downlink data to the terminal device in a targeted manner (that is, directional sending), to enhance received signal energy of the terminal device.

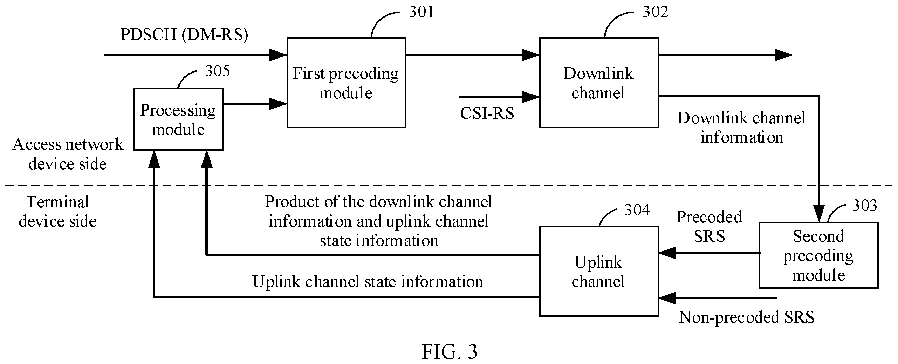

FIG. 3 is a schematic diagram of a closed-loop precoding based system according to an embodiment of this application. As shown in FIG. 3, the closed-loop precoding based system includes both a downlink data transmission link and a terminal device feedback link. Specifically, for the downlink data transmission link in FIG. 3, refer to the descriptions of the downlink data transmission link in FIG. 2. A first precoding module 301 has a same or similar function as the closed-loop precoding module 201 in FIG. 2, and a downlink channel 302 is the same as the downlink channel 202 in FIG. 2.

In FIG. 3, the feedback link also starts from a terminal device side and ends at an access network device side, and is used to feed back information to the access network device. Specifically, the access network device sends a CSI-RS to the terminal device, and the terminal device may estimate downlink channel information based on the received CSI-RS that passes through a downlink channel. Then, the terminal device sends a non-precoded SRS to the access network device by using an uplink channel 304. This step may correspond to step 110 in FIG. 1. A processing module 305 in the access network device estimates uplink channel state information based on the received non-precoded SRS that passes through the uplink channel. This step may correspond to step 120 in FIG. 1. Then, a second precoding module 303 precodes an SRS sequence in a precoded SRS resource based on the downlink channel information, and sends a precoded SRS sequence by using an SRS time-frequency resource of the precoded SRS resource. This step may correspond to step 130 in FIG. 1. The access network device may estimate equivalent uplink channel state information based on the received precoded SRS, that is, estimate a product of the downlink channel information and the uplink channel state information. This step may correspond to step 140 in FIG. 1. Then, the determining module 305 in the access network device reversely parses out the downlink channel information based on the previously estimated uplink channel state information. Specifically, a process in which the access network determines the downlink channel information may correspond to step 150 in FIG. 1. In this way, in a process in which the terminal device feeds back the downlink channel information, a quantization error can be avoided.

It should be noted that in FIG. 2 and FIG. 3, the closed-loop precoding module, the precoding module, and the processing module may be implemented by a processor, and the transceiver module may be implemented by a transceiver. Details are not described herein again.

In this embodiment of this application, to ensure that transmit power of a precoded SRS meets a requirement of the terminal device, power compression or amplification processing may be performed on a downlink channel information matrix estimated by the terminal device, that is, the downlink channel information matrix is multiplied by a scalar value. In this case, the downlink channel information obtained by the access network device is the equivalent downlink channel information, and key information, for example, channel direction information (that is, a direction of a vector formed by a row or a column of the channel information matrix) of the equivalent downlink channel information is unchanged.

It should be noted that, in this embodiment of this application, both the non-precoded SRS and the precoded SRS may be wideband-level or sub-band-level SRSs. In other words, the non-precoded SRS or the precoded SRS may be sent on all frequency bands (that is, wideband) that can be used by the terminal device, or may be sent on a part of a frequency band (that is, a sub-band) that can be used by the terminal device. If the terminal device uses a non-precoded SRS corresponding to a wideband, the access network device may estimate uplink channels on all frequency bands at one time. If the terminal device uses a precoded SRS corresponding to a wideband, the access network device may estimate equivalent uplink channels on all frequency bands at one time, thereby helping reduce a channel estimation delay. If the terminal device uses a non-precoded SRS corresponding to a sub-band, the access network device can estimate only an uplink channel on a bandwidth part in each channel estimation. If the terminal device uses a precoded SRS corresponding to a sub-band, the access network device can estimate only an equivalent uplink channel on a bandwidth part in each channel estimation. However, an estimated value of an SRS corresponding to the sub-band is more accurate than an estimated value of an SRS corresponding to the wideband.

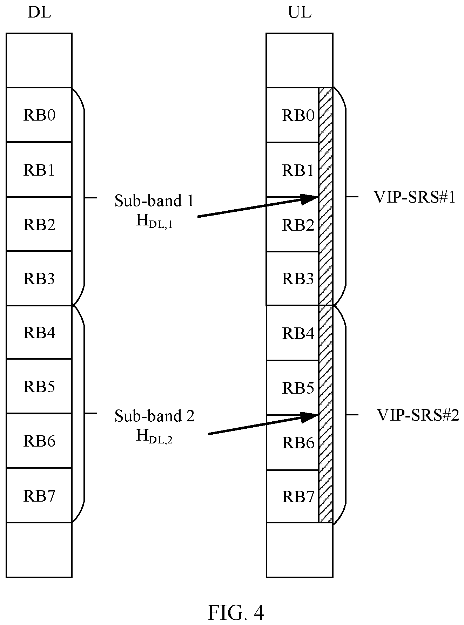

As shown in FIG. 4, when the terminal device sends a precoded SRS by using a sub-band SRS, weighting coefficients used for precoded SRSs corresponding to different sub-bands are also different. Sending time points of precoded SRSs corresponding to different sub-bands are different. Specifically, in FIG. 4, an RB 0 to an RB 3 are a sub-band 1, and an RB 4 to an RB 7 are a sub-band 2. The access network device may configure an SRS resource used by a precoded SRS corresponding to the sub-band 1 of the terminal device, as frequency domain resources in the slashed part of the RB 0 to the RB 3 in FIG. 4, and configure an SRS resource used for a precoded SRS corresponding to the sub-band 2, as frequency domain resources in the slashed part of the RB 4 to the RB 7 in FIG. 4. Then, the terminal device can estimate, by using the CSI-RS that is sent by the access network device and that passes through the downlink channel, that downlink channel information corresponding to the sub-band 1 is $H_{DL,1}$ and that downlink channel information corresponding to the sub-band 2 is $H_{DL,2}$. Then, the terminal device sends, on the precoded SRS resource corresponding to the sub-band 1, a precoded SRS generated through precoding by using $H_{DL,1}$, and sends, on the precoded SRS resource corresponding to the sub-band 2, a precoded SRS generated through precoding by using $H_{DL,2}$.

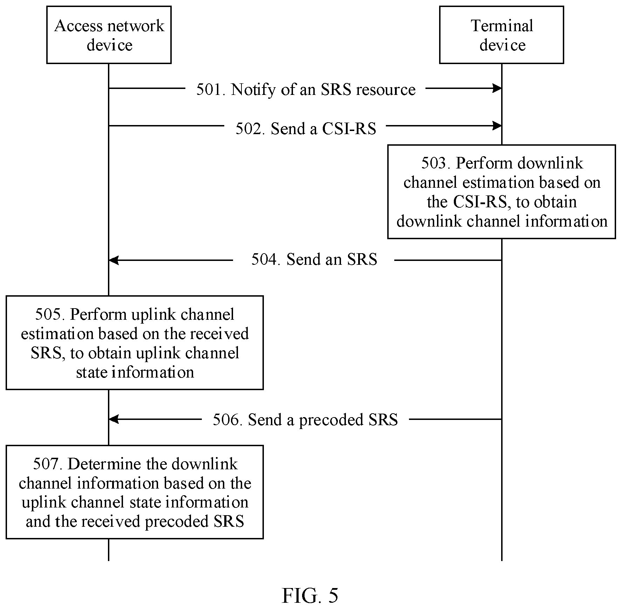

FIG. 5 is a schematic flowchart of obtaining downlink channel information according to an embodiment of this application. It should be understood that FIG. 5 shows steps or operations of obtaining downlink channel information, but these steps or operations are merely examples. In this embodiment of this application, other operations or variations of the operations in FIG. 5 may be further performed. In addition, the steps in FIG. 5 may be performed in a sequence different from that presented in FIG. 5, and possibly, not all operations in FIG. 5 need to be performed.

It should be further understood that, in FIG. 5, an example in which a terminal device interacts with an access network device to obtain downlink channel information is used to describe the obtaining downlink channel information. As an example instead of a limitation, the obtaining downlink channel information may also be performed by a chip of the terminal device and a chip of the access network device.

501. The access network device notifies the terminal device of an SRS resource.

Specifically, the access network device allocates an SRS resource corresponding to a non-precoded SRS to each terminal device in a wireless communications system, and also needs to allocate an SRS resource corresponding to a precoded SRS to each terminal device.

The terminal device may first allocate, by using higher layer signaling, the SRS resource corresponding to the non-precoded SRS to each terminal device in the wireless communications system. The non-precoded SRS of each terminal device is used by the access network device to estimate an uplink channel from each terminal device to the access network device.

In this embodiment of this application, a quantity of SRS resources included in the non-precoded SRS resource of each terminal device is a quantity of transmit antenna ports of the terminal device. For example, when the quantity M of transmit antenna ports of the terminal device is 2, the precoded SRS resource of the terminal device includes two precoded SRS resources. In addition, to enable the access network device to distinguish between non-precoded SRSs sent by all terminal devices, non-precoded SRSs of a plurality of terminal devices in the communications system use different SRS pilot sequences, or use a same SRS pilot sequence but occupy different time-frequency resources.

For the SRS resource corresponding to the precoded SRS, a quantity of required orthogonal SRS pilots is a quantity of columns of a precoding matrix W.

In this embodiment of this application, the precoding matrix W may be downlink channel information or a matrix determined based on downlink channel information. It should be noted that a quantity of rows in the downlink channel information matrix is a quantity of receive antenna ports of the terminal device, and a quantity of columns is a quantity of transmit antenna ports of the access network device. Generally, a quantity of receive antenna ports of the access network device or the terminal device is greater than or equal to a quantity of transmit antenna ports. For example, in an NR system with four transmit/receive ports on a terminal device and 32 transmit/receive ports on an access network device, uplink transmission supports 4Tx/32Rx (the terminal device has four transmit ports, the access network device has 32 receive ports, and $M_T=4$), a downlink supports 16Tx/4Rx (the access network device has 16 transmit ports, the terminal device has four receive ports, and $Q_T=16$) or 32Tx/4Rx (the access network device has 32 transmit ports, the terminal device has four receive ports, and $M_T=32$). It can be learned that if the downlink channel information needs to be fed back to the access network device, orthogonal resources of a precoded SRS that are required by the terminal device are multiplied compared with those of a non-precoded SRS. If orthogonal SRS resources cannot be reused by terminal devices, a quantity of terminal devices that can be supported in simultaneously sending SRSs in the system decreases exponentially. For example, the system has 32 orthogonal SRS resources in total. If each terminal device uses four orthogonal SRS resources, eight terminal devices can be supported in simultaneously sending precoded SRSs. If each terminal device uses 16 orthogonal SRS resources, two terminal devices can be supported in simultaneously sending precoded SRSs.

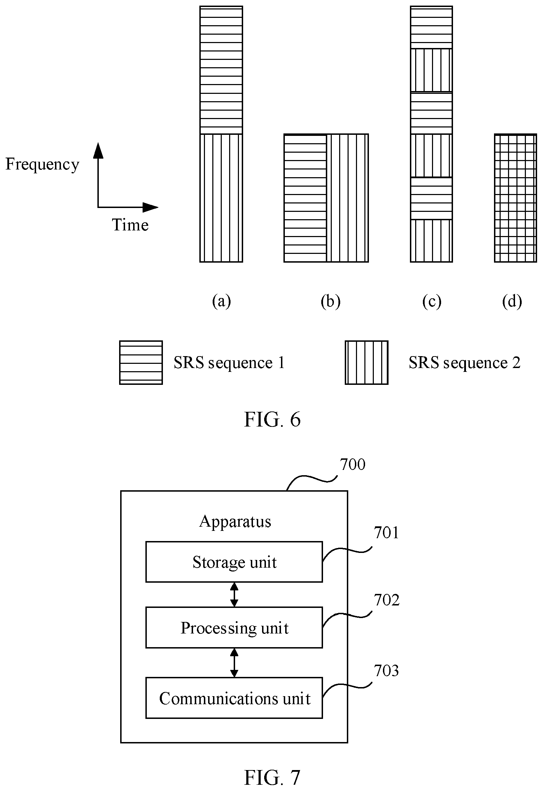

In FIG. 6, (a) shows a schematic diagram in which an SRS sequence 1 and an SRS sequence 2 are orthogonal in frequency domain, (b) shows a schematic diagram in which an SRS sequence 1 and an SRS sequence 2 are orthogonal in time domain, (c) shows a schematic diagram in which an SRS sequence 1 and an SRS sequence 2 have orthogonal combs, and (d) shows a schematic diagram in which an SRS sequence 1 and an SRS sequence 2 are orthogonal in code domain.

To save precoded SRS resources, in this embodiment of this application, a plurality of terminal devices may reuse same SRS resources. In a possible implementation, the access network device may group a plurality of terminal devices in the wireless communications system, and each terminal device group (group) includes at least two terminal devices. In addition, optionally, terminal devices in a same group send precoded SRSs by using same N SRS resources.

In another possible implementation, a network device does not perform a grouping step, and allocates SRS resources to at least two terminal devices to send precoded SRSs, where at least one same SRS resource is allocated to the at least two terminal devices.

Then, the access network device may notify each terminal device in the group of the N SRS resources to be used by each terminal device. In this embodiment of this application, when the access network device has Q transmit antenna ports, each terminal device includes M transmit antenna ports, and N SRS resources used by all terminal devices are the same, a maximum quantity of terminal devices included in the terminal device group is N divided by M. For example, when M=2 and N=16, each terminal device group includes a maximum of eight terminal devices.

Specifically, the access network device may notify one terminal device in the terminal device group of SRS sequences corresponding to non-precoded SRSs of other terminal devices, to indicate the terminal device to use SRS sequences corresponding to non-precoded SRSs of all terminal devices in the terminal device group as SRS sequences corresponding to precoded SRSs. The other terminal devices are terminal devices other than the terminal device in the terminal device group. Herein, the SRS sequences corresponding to the precoded SRSs are, for example, the SRS sequences of the N SRS resources described above.

For example, when M=2 and N=16, the access network device groups a terminal device 1, a terminal device 2, a terminal device 3, a terminal device 4, a terminal device 5, a terminal device 6, a terminal device 7, and a terminal device 8 into one group, and configures a non-precoded SRS resource SRS1 for the terminal device 1, a non-precoded SRS resource SRS2 for the terminal device 2, and by analogy, a non-precoded SRS resource SRS8 for the terminal device 8. The SRS1, the SRS2, the SRS3, the SRS4, the SRS5, the SRS6, the SRS7 and the SRS8 each include two SRS resources, and each SRS resource corresponds to one SRS sequence. Then, the access network device may notify each terminal device of SRS sequences of non-precoded SRSs of other terminal devices in the group. In this way, the terminal device may determine that sequences that are of precoded SRSs and that are used by the terminal device are precoding sequences corresponding to the SRS1 to the SRS8.

In this embodiment of this application, the access network device may alternatively notify each terminal device of more SRS resources or notify each terminal device of fewer SRS resources. This is not limited in this embodiment of this application.

Therefore, in this embodiment of this application, that a plurality of terminal devices reuse same N SRS resources can improve SRS resource use efficiency in the system.

It should be noted that, in this embodiment of this application, if the grouping of the terminal devices is long-term or semi-static, the access network device may notify each terminal device by using higher layer signaling. This can help reduce load of physical layer signaling and save physical layer signaling resources. If the grouping of the terminal devices is dynamic, physical layer signaling is used, so that a grouping status of the terminal devices can be notified in a timely manner.

502. The access network device sends a channel state information reference signal (channel state information reference signal, CSI-RS) to each terminal device in the group.

Correspondingly, in step 503, each terminal device receives the CSI-RS that passes through a downlink channel, and performs downlink channel estimation based on the received CSI-SRS that passes through the downlink channel, to obtain each downlink channel and downlink channel information.

Specifically, one of the terminal devices is used as an example. A CSI-RS sent by the access network device is denoted as S. Based on orthogonality of reference signals (reference signal, RS), $S_{SH}=I$. If the CSI-RS signal passes through a module, it indicates that a linear change (that is, $x$ is changed to $ax+b$) is performed on the CSI-RS signal. After passing through a downlink channel, the CSI-RS changes to $H_{DL}S$, and after passing through a receiver of the terminal device, the CSI-RS changes to $Y=H_{DL}S+N_{DL}$. Herein, $Y$ is referred to as a received signal, and $N_{DL}$ is receive-end thermal noise caused by a receive end component, which cannot be avoided. The processor post-multiplies a transposed $S^H$ of the CSI-RS by the received signal $Y$ as downlink channel information $\hat{H}_{DL}$ for estimating the downlink channel, that is:

$$\hat{H}_{DL}=YS^H=H_{DL}+N_{DL}S^H=H_{DL}+\Delta H_{DL} \ (1)$$

$\Delta H_{DZ}=N_{DL}S^H$ is an estimated error of the downlink channel described above.

It should be noted that this is only one channel estimation solution, and another channel estimation solution is not excluded in this embodiment, and the another estimation solution does not affect a manner of modeling the estimated channel into a sum of a real channel and the estimated error in this embodiment.

In this embodiment of this application, downlink channel information estimated by an $i^{th}$ terminal device in the terminal device group may be denoted as $\hat{H}_{DL,i}$, where

$$\hat{H}_{DL,i}=H_{DL,i}+\Delta H_{DL,i} \ (2)$$

It should be noted that, in this embodiment of this application, a quantity of rows of the downlink channel information $\hat{H}_{DL}$ is a quantity of receive antenna ports of the terminal device, and a quantity of columns of the downlink channel information is a quantity of transmit antenna ports of the access network device. For example, when P=2 and Q=16, the downlink channel information $\hat{H}_{DL}$ is a 2×16 matrix.

504. Each terminal device sends a non-precoded SRS to the access network device.

Specifically, the terminal device 1 sends the non-precoded SRS on the SRS1, the terminal device 2 sends the non-precoded SRS on the SRS2, and by analogy, the terminal device 8 sends the non-precoded SRS on the SRS8. When the reference signal in FIG. 1 is an SRS, step 504 may correspond to step 110 in FIG. 1.

Correspondingly, in step 505, the access network device estimates, based on the received non-precoded SRS that passes through the uplink channel, state information of the uplink channel from each terminal device to the access network device. When the reference signal in FIG. 1 is an SRS, step 505 may correspond to step 120 in FIG. 1.

Specifically, one terminal device is used as an example. In uplink channel estimation, the terminal device sends a non-precoded SRS to the access network device. Because the non-precoded SRS and the CSI-RS may use a same sequence, and one of the two is used for uplink channel estimation and the other is used for downlink channel estimation, causing no confusion. Therefore, an SRS is still marked as S in the following descriptions. According to an RS feature, $SS^H=I$. In this embodiment of this application, the precoded SRS may also be referred to as an SRS. The SRS changes to $H_{UL}S$ after passing through an uplink channel. In this case, a received signal of the access network device is $Y=H_{UL}S+N_{UL}$. Herein, $N_{UL}$ is receive-end thermal noise caused by a receive end component, and cannot be avoided. A channel estimation submodule post-multiplies a transpose $S^H$ of the SRS by the received signal $Y$ as the uplink channel state information for estimating the uplink channel, that is:

$$\hat{H}_{UL}=YS^H=H_{UL}+N_{UL}S^H\triangleq H_{UL}+\Delta H_{UL}\ (3)$$

$\Delta H_{UL}=N_{UL}S^H$ is an estimated error of the uplink channel.

It should be noted that this is only one uplink channel estimation solution, and another channel estimation solution is not excluded in this embodiment, and the another estimation solution does not affect a manner of modeling the estimated channel into a sum of a real channel and the estimated error in this embodiment.

In this embodiment of this application, uplink channel state information that is of the $i^{th}$ terminal device in the terminal device group and that is estimated by the access network device may be denoted as $\hat{H}_{UL,i}$, where

$$\hat{H}_{UL,i}=H_{UL,i}+\Delta H_{UL,i}\ (4)$$

It should be noted that, in this embodiment of this application, a quantity of rows of the uplink channel information $\hat{H}_{UL}$ is a quantity of receive antenna ports of the access network device, and a quantity of columns of the uplink channel information is a quantity of transmit antenna ports of the terminal device. For example, when M=2 and N=16, the uplink channel state information $\hat{H}_{UL}$ is a 16x2 matrix.

506. Each terminal device sends a precoded SRS to the access network device.

Specifically, the terminal device 1 sends the precoded SRS on the SRS1 to the SRS8, the terminal device 2 sends the precoded SRS on the SRS1 to the SRS8, and by analogy, the terminal device 8 sends the precoded SRS on the SRS1 to the SRS8. When the reference signal in FIG. 1 is an SRS, step 506 may correspond to step 130 in FIG. 1.

Correspondingly, in step 507, the access network device determines, based on the uplink channel state information and the received precoded SRS that passes through the uplink channel, information about a downlink channel from each terminal device to the access network device. Specifically, when the reference signal in FIG. 1 is an SRS, step 507 may correspond to steps 140 and 150 in FIG. 1.

In this embodiment of this application, the SRS1 to the SRS8 may be denoted as $S_1$ to $S_8$ respectively. In this case, the 16 SRS resources used to send the precoded SRS may be denoted as $S_p=\begin{bmatrix} S_1 \\ S_2 \\ \vdots \\ S_8 \end{bmatrix}$, and $S_pS_p^H=I$.

One terminal device is used as an example. $W$ is denoted as a precoding matrix used for the precoded SRS, and the precoded SRS is denoted as $WS_p$. After passing through the uplink channel, the precoded SRS becomes $H_{UL}WS_p$. In this case, the received signal of the access network device is $Y=H_{UL}WS_p+N'_{UL}$, and an uplink equivalent estimation channel $H_{UL}W$ is:

$$\widehat{H_{UL}W} = YS_p{}^H = H_{UL}W + N'_{UL}S_p{}^H \triangleq H_{UL}W + H'_{UL} \quad (5)$$

$\Delta H'_{UL} = N'_{UL}S_p{}^H$ is an estimated error of the uplink equivalent channel.

It should be noted that this is only one uplink channel estimation solution, and another channel estimation solution is not excluded in this embodiment, and the another estimation solution does not affect a manner of modeling the estimated channel into a sum of a real channel and the estimated error in this embodiment.

Specifically, for the foregoing terminal device group including the terminal device 1 to the terminal device 8,

$$S_p = \begin{bmatrix} S_1 \\ S_2 \\ \vdots \\ S_8 \end{bmatrix}$$

the $i^{th}$ terminal device may weight based on $H_{DL,i}$, to obtain a precoded SRS. In this case, the precoded SRS may be denoted as $\hat{H}_{DL,i}$, and the precoded SRS is sent to the access network device.

The access network device receives the precoded SRSs that are sent by all the terminal devices in the terminal device group and that pass through the uplink channel, and determines the downlink channel information of each terminal device based on the received precoded SRSs and the previously estimated uplink channel state information of each terminal device.

Specifically, after passing through the uplink channel between the terminal device and the access network device, the precoding sent by the $i^{th}$ terminal device may be denoted as $H_{UL,i}\hat{H}_{DL,i}$. In this case, the precoded SRSs that are sent by all the terminal devices and received by the access network device and that passes through an uplink channel may be denoted as Y, where

$$Y = \sum_{i=1}^{4} \mathbf{H}_{UL,i}\hat{\mathbf{H}}_{DL,i} \begin{bmatrix} S_1 \\ S_2 \\ \vdots \\ S_8 \end{bmatrix} + N_{UL} = \begin{bmatrix} H_{UL,1} & H_{UL,2} & H_{UL,3} & H_{UL,4} & H_{UL,5} & H_{UL,6} & H_{UL,7} & H_{UL,8} \end{bmatrix}$$

$$\begin{bmatrix} \hat{H}_{DL,1} \\ \hat{H}_{DL,2} \\ \hat{H}_{DL,3} \\ \hat{H}_{DL,4} \\ \hat{H}_{DL,5} \\ \hat{H}_{DL,6} \\ \hat{H}_{DL,7} \\ \hat{H}_{DL,8} \end{bmatrix} \begin{bmatrix} S_1 \\ S_2 \\ \vdots \\ S_8 \end{bmatrix} + N_{UL}.$$

$$\begin{bmatrix} \hat{H}_{DL,1} \\ \hat{H}_{DL,2} \\ \hat{H}_{DL,3} \\ \hat{H}_{DL,4} \\ \hat{H}_{DL,5} \\ \hat{H}_{DL,6} \\ \hat{H}_{DL,7} \\ \hat{H}_{DL,8} \end{bmatrix}$$ includes the downlink channel information of each terminal device in the terminal device group that needs to be estimated, $\begin{bmatrix} H_{UL,1} & H_{UL,2} & H_{UL,3} & H_{UL,4} & H_{UL,5} & H_{UL,6} & H_{UL,7} & H_{UL,8} \end{bmatrix}$ includes the uplink channel state information of each terminal device in the terminal device group, and $\begin{bmatrix} S_1 \\ S_2 \\ \vdots \\ S_8 \end{bmatrix}$ is an SRS resource of each terminal device in the terminal device group. Because $\begin{bmatrix} H_{UL,1} & H_{UL,2} & H_{UL,3} & H_{UL,4} & H_{UL,5} & H_{UL,6} & H_{UL,7} & H_{UL,8} \end{bmatrix}$

and $\begin{bmatrix} S_1^H \\ S_2^H \\ S_3^H \\ S_4^H \\ S_5^H \\ S_6^H \\ S_7^H \\ S_8^H \end{bmatrix}$ are both full rank matrices, the access network device may parse out the downlink channel information

$$\begin{bmatrix} \hat{H}_{DL,1} \\ \hat{H}_{DL,2} \\ \hat{H}_{DL,3} \\ \hat{H}_{DL,4} \\ \hat{H}_{DL,5} \\ \hat{H}_{DL,6} \\ \hat{H}_{DL,7} \\ \hat{H}_{DL,8} \end{bmatrix}$$ by using the received signal Y.

Therefore, in this embodiment of this application, the plurality of terminal devices in the terminal device group use the same precoded SRS resources, and obtain the precoded SRSs by using respective downlink channel information, so that the access network device can obtain the downlink channel information of each terminal device by using the received precoded SRS and the estimated uplink channel state information. Therefore, when the access network device obtains more accurate downlink channel information, resources for sending the precoded SRSs are reduced.

The foregoing mainly describes the solutions provided in the embodiments of this application from a perspective of interaction between the terminal device and the access network device. It may be understood that to implement the foregoing functions, the access network device and the terminal device include corresponding hardware structures and/or software modules for implementing the functions. With reference to the units and algorithm steps described in the embodiments disclosed in this application, the embodiments of this application can be implemented in a form of hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the technical solutions of the embodiments of this application.

In the embodiments of this application, division into function units may be performed on the access network device, the terminal device, or the like based on the foregoing method examples. For example, each function unit may be obtained through division based on a corresponding function, or two or more functions may be integrated into one processing unit. The integrated unit may be implemented in a form of hardware, or may be implemented in a form of a software functional unit. It should be noted that, in the embodiments of this application, division into the units is an example, and is merely a logical function division. In an actual implementation, another division manner may be used.

When an integrated unit is used, FIG. 7 is a possible schematic block diagram of an apparatus in the embodiments of this application. The apparatus 700 may be in a form of software, hardware, or a combination of software and hardware. FIG. 7 is the possible schematic block diagram of the apparatus in the embodiments of this application. The apparatus 700 includes a processing unit 702 and a communications unit 703. The processing unit 702 is configured to control and manage an action of the apparatus, and the communications unit 703 is configured to support communication between the apparatus and another device. The apparatus may further include a storage unit 701, configured to store a program code and data of the apparatus.

The apparatus 700 shown in FIG. 7 may be the access network device in the embodiments of this application.

The communications unit 703 is configured to receive a first reference signal from a first terminal device, to obtain first uplink channel state information.

The communications unit 703 is further configured to receive a group of second reference signals from the first terminal device, to obtain second uplink channel state information, where the group of second reference signals is precoded by using downlink channel information, and the group of second reference signals includes one or more second reference signals.

The processing unit 702 is configured to: obtain the first uplink channel state information and the second uplink channel state information, and obtain the downlink channel information based on the first uplink channel state information and the second uplink channel state information.

Therefore, in this embodiment of this application, the access network device estimates the first uplink channel state information of the terminal device based on the first reference signal received from the first terminal device, and estimates the second uplink channel state information of the terminal device based on the group of second reference signals received from the terminal device. Because the group of second reference signals is precoded by using the downlink channel information of the first terminal device, the access network device may determine, based on the estimated first uplink channel state information and the estimated second uplink channel state information, the downlink channel information fed back by the first terminal device. Therefore, different from a general case in which feedback needs to be performed by quantizing a value by using a specific quantity of bits, this embodiment of this application implements a feedback of a scalar/vector between the access network device and the terminal device without a quantization error, thereby improving reliability of feeding back the downlink channel information.

Optionally, different second reference signals correspond to different first combinations, where the first combination includes a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

Optionally, downlink channel information corresponding to at least one second reference signal in the group of second reference signals includes M elements in the downlink channel information, where M is a quantity of transmit antenna ports of the first terminal device.

Optionally, the downlink channel information includes an element in an estimated downlink channel matrix.

Optionally, the processing unit 702 is configured to obtain the estimated downlink channel matrix based on a location, in the estimated downlink channel matrix, of the element that is in the downlink channel information.

Optionally, the frequency domain resource, the time domain resource, and the basic sequence in the first combination are reused by a second terminal device.

Optionally, a basic sequence corresponding to the first reference signal is the same as a basic sequence corresponding to at least one of the one or more second reference signals.

Optionally, the group of second reference signals includes a plurality of second reference signals, and the plurality of second reference signals occupy consecutive time domain symbols.

Optionally, the first reference signal is a non-precoded sounding reference signal SRS, and the second reference signal is a precoded SRS.

Specifically, the processing unit 702 can support the apparatus 700 in performing the actions completed by the access network device in the foregoing method examples. For example, the processing unit 702 supports the apparatus 700 in performing steps 120, 140, and 150 in FIG. 1, steps 505 and 507 in FIG. 5, and/or another related communication process. The communications unit 703 can support communication between the apparatus 700 and the terminal device. For example, the communications unit 703 supports the apparatus 700 in performing steps 110 and 130 in FIG. 1, steps 501, 502, 504, and 506 in FIG. 5, and/or another related communication process.

For example, the processing unit 702 may be a processor or a controller, and for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logical device, a transistor logical device, a hardware component, or any combination thereof. The processor may implement or execute example logical blocks, units, and circuits described with reference to content disclosed in this application. The processor may alternatively be a combination of implementing a computing function, for example, a combination of one or more microprocessors or a combination of a DSP and a microprocessor. The communications unit 703 may be a communications interface, and the communications interface is a generic term. The communications interface may include one or more interfaces during specific implementation. The storage unit 701 may be a memory.

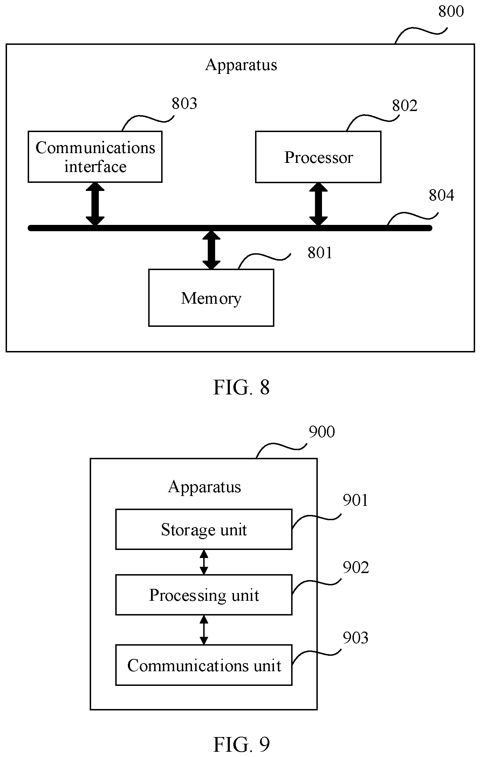

When the processing unit 702 is a processor, the communications unit 703 is a communications interface, and the storage unit 701 is a memory, the apparatus 700 in the embodiments of this application may be an apparatus 800 shown in FIG. 8.

Referring to FIG. 8, the apparatus 800 includes a processor 802 and a communications interface 803. Further, the apparatus 800 may further include a memory 801. Optionally, the apparatus 800 may further include a bus 804. The communications interface 803, the processor 802, and the memory 801 may be connected to each other by using the bus 804. The bus 804 may be a peripheral component interconnect (peripheral component interconnect, PCI) bus, an extended industry standard architecture (extended industry standard architecture, EISA) bus, or the like. The bus 804 may be an address bus, a data bus, a control bus, and the like. For ease of representation, only one thick line is used to represent the bus in FIG. 8, but this does not mean that there is only one bus or only one type of bus.

The processor 802 can perform various functions of the apparatus 800 by running or executing a program stored in the memory 801.

For example, the apparatus 800 shown in FIG. 8 may be the access network device in the embodiments of this application. In this case, the processor 802 may perform, by running or executing the program stored in the memory 801, the actions completed by the access network device in the foregoing method examples.

When an integrated unit is used, FIG. 9 is a possible schematic block diagram of another apparatus in the embodiments of this application. The apparatus 900 may be in a form of software, hardware, or a combination of software and hardware. FIG. 9 is the possible schematic block diagram of the apparatus in the embodiments of this application. The apparatus 900 includes a processing unit 902 and a communications unit 903. The processing unit 902 is configured to control and manage an action of the apparatus. The communications unit 903 is configured to support communication between the apparatus and another device. The apparatus may further include a storage unit 901, configured to store program code and data of the apparatus.

The apparatus 900 shown in FIG. 9 may be a terminal device, or may be a chip used in a terminal device.

The communications unit 903 is configured to send a first reference signal.

The processing unit 902 is configured to precode a group of reference signals based on downlink channel information, to obtain a group of second reference signals. The group of second reference signals includes one or more second reference signals.

The communications unit 903 is further configured to send the group of second reference signals.

Therefore, in this embodiment of this application, the access network device estimates the first uplink channel state information of the terminal device based on the first reference signal received from the first terminal device, and estimates the second uplink channel state information of the terminal device based on the group of second reference signals received from the terminal device. Because the group of second reference signals is precoded by using the downlink channel information of the first terminal device, the access network device may determine, based on the estimated first uplink channel state information and the estimated second uplink channel state information, the downlink channel information fed back by the first terminal device. Therefore, different from a general case in which feedback needs to be performed by quantizing a value by using a specific quantity of bits, this embodiment of this application implements a feedback of a scalar/vector between the access network device and the terminal device without a quantization error, thereby improving reliability of feeding back the downlink channel information.

Optionally, different second reference signals correspond to different first combinations, where the first combination includes a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

Optionally, downlink channel information corresponding to at least one second reference signal in the group of second reference signals includes M elements in the downlink channel information, where M is a quantity of transmit antenna ports of the first terminal device.

Optionally, the downlink channel information includes an element in an estimated downlink channel matrix.

Optionally, the frequency domain resource, the time domain resource, and the basic sequence in the first combination are reused by a second terminal device.

Optionally, a basic sequence corresponding to the first reference signal is the same as a basic sequence corresponding to at least one of the one or more second reference signals.

Optionally, the group of second reference signals includes a plurality of second reference signals, and the plurality of second reference signals occupy consecutive time domain symbols.

Optionally, the first reference signal is a non-precoded sounding reference signal SRS, and the second reference signal is a precoded SRS.

Specifically, the processing unit 902 can support the apparatus 900 in performing the actions completed by the terminal device in the foregoing method examples. For example, the processing unit 902 supports the apparatus 902 in performing the actions of determining the first reference signal and determining the second reference signals in FIG. 1, the actions of determining the non-precoded SRS and determining the precoded SRS and step 503 in FIG. 5, and/or another process used for the technology described in this specification. The communications unit 903 can support communication between the apparatus 900 and the access network device. For example, the communications unit 903 supports the apparatus 900 in performing steps 110 and 120 in FIG. 1, steps 501, 502, 504, and 506 in FIG. 5, and/or another related communication process.

For example, the processing unit 902 may be a processor or a controller, such as a CPU, a general-purpose processor, a DSP, an ASIC, an FPGA, or another programmable logic device, a transistor logic device, a hardware component, or any combination thereof. The processor may implement or execute example logical blocks, units, and circuits described with reference to content disclosed in this application. The processor may alternatively be a combination of implementing a computing function, for example, a combination of one or more microprocessors or a combination of a DSP and a microprocessor. The communications unit 903 may be a communications interface, and the communications interface is a generic term. During specific implementation, the communications interface may include one or more interfaces. The storage unit 901 may be a memory.

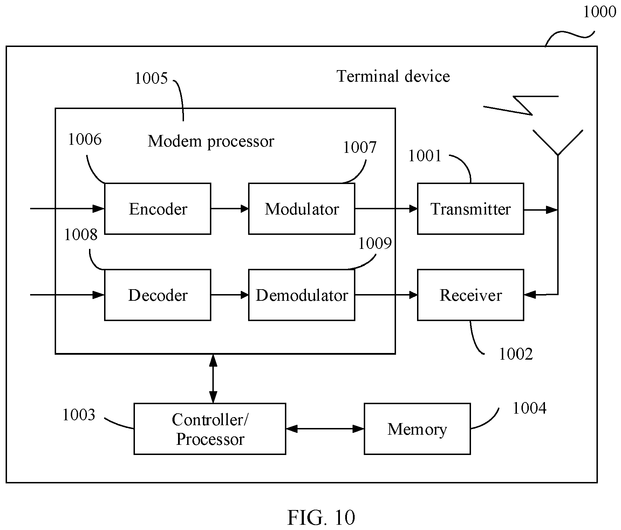

When the processing unit 902 is a processor, the communications unit 903 is a transceiver, and the storage unit 901 is a memory, the apparatus 900 in this embodiment of this application may be a terminal device shown in FIG. 10.

FIG. 10 is a simplified schematic diagram of a possible design structure of the terminal device according to an embodiment of this application. The terminal device 1000 includes a transmitter 1001, a receiver 1002, and a processor 1003. The processor 1003 may alternatively be a controller, and is represented as a "controller/processor 1003" in FIG. 10. Optionally, the terminal device 1000 may further include a modem processor 1005. The modem processor 1005 may include an encoder 1006, a modulator 1007, a decoder 1008, and a demodulator 1009.

In an example, the transmitter 1001 adjusts (for example, analog converts, filters, amplifies, and upconverts) an output sample and generates an uplink signal. The uplink signal is transmitted by an antenna to the base station in the foregoing embodiments. On a downlink, the antenna receives a downlink signal transmitted by the base station in the foregoing embodiments. The receiver 1002 adjusts (for example, through filtering, amplification, downconversion, and digitization) a signal received from the antenna and provides an input sample. In the modem processor 1005, the encoder 1006 receives service data and a signaling message that are to be sent over an uplink, and processes (for example, formats, encodes, and interleaves) the service data and the signaling message. The modulator 1007 further processes (for example, performs symbol mapping and modulation) encoded service data and an encoded signaling message and provides an output sample. The demodulator 1009 processes (for example, demodulates) the input sample and provides symbol estimation. The decoder 1008 processes (for example, de-interleaves and decodes) the symbol estimation and provides decoded data and a decoded signaling message that are to be sent to the terminal device 1000. The encoder 1006, the modulator 1007, the demodulator 1009, and the decoder 1008 may be implemented by the combined modem processor 1005. These units perform processing based on a radio access technology (for example, an access technology in LTE, 5G, and another evolved system) used in a radio access network. It should be noted that when the terminal device 1000 does not include the modem processor 1005, the foregoing functions of the modem processor 1005 may alternatively be performed by the processor 1003.

The processor 1003 controls and manages an action of the terminal device 1000, and is configured to perform a processing process performed by the terminal device 1000 in the foregoing embodiments of this application. For example, the processor 1003 is further configured to perform the processing processes of the terminal device in the

23

methods shown in FIG. 3 to FIG. 5 and/or another process of the technical solutions described in this application.

Further, the terminal device 1000 may include a memory 1004, where the memory 1004 is configured to store program code and data of the terminal device 1000.

The methods or algorithm steps described in combination with the content disclosed in the embodiments of this application may be implemented by hardware, or may be implemented by a processor executing software instructions. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may alternatively be a component of the processor. The processor and the storage medium may also be located in an ASIC. In addition, the ASIC may be in a control plane entity of a centralized unit, a user plane entity of a centralized unit, a terminal device, or a unified data storage network element. Certainly, the processor and the storage medium may alternatively be discrete components in a control plane entity of a centralized unit, a user plane entity of a centralized unit, a terminal device, or a unified data storage network element.

A person of skill in the art should be aware that in one or more of the foregoing examples, the functions described in the embodiments of this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible to a general purpose or dedicated computer.

In the foregoing specific implementations, the objectives, technical solutions, and benefits of the embodiments of this application are further described in detail. It should be understood that the foregoing descriptions are merely specific implementations of the embodiments of this application, but are not intended to limit the protection scope of the embodiments of this application. Any modification, equivalent replacement, or improvement made based on technical solutions of the embodiments of this application shall fall within the protection scope of the embodiments of this application.

When the functions are implemented in the form of a software functional unit and sold or used as an independent product, the functions may be stored in a computer-readable storage medium. Based on such an understanding, the technical solutions of this application essentially, or the part contributing to a current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for obtaining downlink channel information, comprising:

    receiving a first reference signal from a first terminal device, to obtain first uplink channel state information;
    receiving a group of second reference signals from the first terminal device, to obtain second uplink channel state information, wherein the group of second reference signals is precoded by using downlink channel information, and the group of second reference signals comprises one or more second reference signals; and
    obtaining the downlink channel information based on the first uplink channel state information and the second uplink channel state information.

2. The method according to claim 1, wherein
    different second reference signals correspond to different first combinations, wherein the first combination comprises a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

3. The method according to claim 1 or 2, wherein downlink channel information corresponding to at least one second reference signal in the group of second reference signals comprises M elements in the downlink channel information, wherein M is a quantity of transmit antenna ports of the first terminal device.

4. The method according to any one of claims 1 to 3, wherein the downlink channel information comprises an element in an estimated downlink channel matrix.

5. The method according to claim 4, comprising:
obtaining the estimated downlink channel matrix based on a location, in the estimated downlink channel matrix, of the element that is in the downlink channel information.

6. The method according to any one of claims 2 to 5, wherein the frequency domain resource, the time domain resource, and the basic sequence in the first combination are reused by a second terminal device.

7. The method according to any one of claims 1 to 6, wherein
a basic sequence corresponding to the first reference signal is the same as a basic sequence corresponding to at least one of the one or more second reference signals.

8. The method according to any one of claims 1 to 7, wherein the group of second reference signals comprises a plurality of second reference signals, and the plurality of second reference signals occupy consecutive time domain symbols.

9. The method according to any one of claims 1 to 8, wherein the first reference signal is a non-precoded sounding reference signal SRS, and the second reference signal is a precoded SRS.

10. A method for obtaining downlink channel information by using a reference signal, comprising:

sending, by a first terminal device, a first reference signal;
precoding, by the first terminal device, a group of reference signals based on downlink channel information, to obtain a group of second reference signals, wherein the group of second reference signals comprises one or more second reference signals; and
sending, by the first terminal device, the group of second reference signals.

11. The method according to claim 10, wherein
different second reference signals correspond to different first combinations, wherein the first combination comprises a frequency domain resource occupied by the second reference signal, a time domain resource occupied by the second reference signal, and a basic sequence corresponding to the second reference signal, and the basic sequence is a sequence existing before the second reference signal is precoded by using the downlink channel information.

12. The method according to claim 10 or 11, wherein downlink channel information corresponding to at least one second reference signal in the group of second reference signals comprises M elements in the downlink channel information, wherein M is a quantity of transmit antenna ports of the first terminal device.

13. The method according to any one of claims 10 to 12, wherein the downlink channel information comprises an element in an estimated downlink channel matrix.

14. The method according to any one of claims 11 to 13, wherein the frequency domain resource, the time domain resource, and the basic sequence in the first combination are reused by a second terminal device.

15. The method according to any one of claims 10 to 14, wherein
a basic sequence corresponding to the first reference signal is the same as a basic sequence corresponding to at least one of the one or more second reference signals.

16. The method according to any one of claims 10 to 15, wherein the group of second reference signals comprises a plurality of second reference signals, and the plurality of second reference signals occupy consecutive time domain symbols.

17. The method according to any one of claims 10 to 16, wherein the first reference signal is a non-precoded sounding reference signal SRS, and the second reference signal is a precoded SRS.

18. An access network device, comprising units configured to perform the steps in the method according to any one of claims 1 to 9.

19. An apparatus, applied to a terminal device and comprising units configured to perform the steps in the method according to any one of claims 10 to 17.

20. A terminal device, comprising units configured to perform the steps in the method according to any one of claims 10 to 17.

21. A computer storage medium, wherein the computer storage medium stores program code, and the program code comprises instructions used to indicate to perform the method according to any one of claims 1 to 9.

22. A computer storage medium, wherein the computer storage medium stores program code, and the program code comprises instructions used to indicate to perform the method according to any one of claims 10 to 17.

Access network device

First terminal device

110. First reference signal

120. Obtain first uplink
channel state information

130. Group of second reference signals

140. Obtain second uplink
channel state information

150. Obtain downlink
channel information

FIG. 1

Access network
device side

Terminal
device side

201

202

203

PDSCH (DM-RS)

Closed-
loop
precoding
module

Downlink
channel

Receiving
module

CSI-RS

Feedback information

FIG. 2

PDSCH (DM-RS)

301

First precoding module

302

Downlink channel

305

Processing module

CSI-RS

Access network device side

Downlink channel information

Terminal device side

Product of the downlink channel information and uplink channel state information

304

Precoded SRS

303

Uplink channel state information

Uplink channel

Second precoding module

Non-precoded SRS

FIG. 3

DL

UL

| RB0 |
| RB1 |
| RB2 |
| RB3 |
| RB4 |
| RB5 |
| RB6 |
| RB7 |

Sub-band 1
$H_{DL,1}$

Sub-band 2
$H_{DL,2}$

| RB0 |
| RB1 |
| RB2 |
| RB3 |
| RB4 |
| RB5 |
| RB6 |
| RB7 |

VIP-SRS#1

VIP-SRS#2

FIG. 4

FIG. 5

(a)　　　(b)　　　(c)　　　(d)

SRS sequence 1　　　　SRS sequence 2

FIG. 6

FIG. 7

800

Apparatus

803

Communications
interface

802

Processor

804

801

Memory

FIG. 8

900

Apparatus

901

Storage unit

902

Processing unit

903

Communications unit

FIG. 9

1000

Terminal device

1005

1006    Modem processor    1007    1001

| Encoder | Modulator | | Transmitter |

1008    1009

| Decoder | Demodulator | | Receiver |

1002

1003    Controller/
Processor    Memory    1004

FIG. 10

## INTERNATIONAL SEARCH REPORT

International application No.

**PCT/CN2018/123615**

**A.    CLASSIFICATION OF SUBJECT MATTER**

H04W 72/08(2009.01)i

According to International Patent Classification (IPC) or to both national classification and IPC

**B.    FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 探测参考信号, 预编码, 非预编码, 下行, SRS, precoded, non-precoded, downlink

**C.    DOCUMENTS CONSIDERED TO BE RELEVANT**

| Category* | Citation of document, with indication, where appropriate, of the relevant passages | Relevant to claim No. |
|---|---|---|
| Y | CN 108289330 A (ZTE CORPORATION) 17 July 2018 (2018-07-17)<br>description, paragraphs 4 and 153-158 | 1-22 |
| Y | CN 101674655 A (ZTE CORPORATION) 17 March 2010 (2010-03-17)<br>description, p. 5, paragraphs 5-8 | 1-22 |
| A | US 2010285762 A1 (KO, H. et al.) 11 November 2010 (2010-11-11)<br>entire document | 1-22 |
| A | WO 2018212894 A1 (QUALCOMM INCORPORATED) 22 November 2018 (2018-11-22)<br>entire document | 1-22 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 August 2019** | **24 September 2019** |

| Name and mailing address of the ISA/CN | Authorized officer |
|---|---|
| **National Intellectual Property Administration, PRC (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/123615**

| Patent document cited in search report | | | Publication date (day/month/year) | Patent family member(s) | | | Publication date (day/month/year) |
|---|---|---|---|---|---|---|---|
| CN | 108289330 | A | 17 July 2018 | WO | 2018126913 | A1 | 12 July 2018 |
| CN | 101674655 | A | 17 March 2010 | WO | 2010145596 | A1 | 23 December 2010 |
| US | 2010285762 | A1 | 11 November 2010 | KR | 20100120256 | A | 15 November 2010 |
| WO | 2018212894 | A1 | 22 November 2018 | US | 2018337716 | A1 | 22 November 2018 |

Form PCT/ISA/210 (patent family annex) (January 2015)